(19)

Europäisches Patentamt
European Patent Office
Office européen des brevets

(11)  **EP 3 451 727 B1**

(12)  **EUROPEAN PATENT SPECIFICATION**

(45) Date of publication and mention
of the grant of the patent:
**11.08.2021  Bulletin 2021/32**

(51) Int Cl.:
*H04W 16/10* *(2009.01)*          *H04W 72/12* *(2009.01)*
*H04L 29/08* *(2006.01)*

(21) Application number: **17795468.2**

(22) Date of filing: **03.05.2017**

(86) International application number:
**PCT/CN2017/082938**

(87) International publication number:
**WO 2017/193850 (16.11.2017 Gazette 2017/46)**

(54) **ACCESS SCHEDULING METHOD AND DEVICE FOR TERMINAL, AND COMPUTER STORAGE MEDIUM**

ZUGRIFFSPLANUNGSVERFAHREN UND -VORRICHTUNG FÜR ENDGERÄT UND COMPUTERSPEICHERMEDIUM

PROCÉDÉ ET DISPOSITIF DE PLANIFICATION D'ACCÈS POUR TERMINAL, ET SUPPORT DE STOCKAGE INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **09.05.2016  CN 201610301528**

(43) Date of publication of application:
**06.03.2019  Bulletin 2019/10**

(73) Proprietor: **Tencent Technology (Shenzhen) Company Limited**
**Shenzhen, Guangdong 518057 (CN)**

(72) Inventors:
• **LV, Yangyang**
**Shenzhen**
**Guangdong 518057 (CN)**
• **SONG, Yingpai**
**Shenzhen**
**Guangdong 518057 (CN)**
• **ZHENG, Zedong**
**Shenzhen**
**Guangdong 518057 (CN)**

• **YANG, Yang**
**Shenzhen**
**Guangdong 518057 (CN)**

(74) Representative: **V.O.**
**P.O. Box 87930**
**Carnegieplein 5**
**2508 DH Den Haag (NL)**

(56) References cited:
**WO-A1-2016/037660      CN-A- 102 124 813**
**CN-A- 102 132 595      CN-A- 103 841 126**

• **MEI LUO ET AL: "Research on resources scheduling technology based on fuzzy clustering analysis", FUZZY SYSTEMS AND KNOWLEDGE DISCOVERY (FSKD), 2012 9TH INTERNATIONAL CONFERENCE ON, IEEE, 29 May 2012 (2012-05-29), pages 152-155, XP032456046, DOI: 10.1109/FSKD.2012.6234215 ISBN: 978-1-4673-0025-4**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE TECHNOLOGY

The present disclosure relates to the field of communications technologies, and in particular, to an access scheduling method and apparatus for a terminal, and a computer storage medium.

BACKGROUND OF THE DISCLOSURE

For a communications system with a client/server (C/S) architecture, access scheduling of a terminal is a very important part, and the access scheduling is control logic for designating which servers access a terminal and provide services to the terminal.

In the existing technology, in a common access scheduling solution, scheduling is usually performed based on locations. Specifically, geographic location information of a terminal is obtained (or obtained by using an IP or directly obtained), and then a corresponding machine (such as a server) is allocated according to the geographic location information to provide services to the terminal, that is, a corresponding machine is made to access the terminal, to provide services to the terminal. For example, after the geographic location information of the terminal is obtained, a machine close to or closest to the geographic location of the terminal is allocated to provide services to the terminal. Access scheduling in this case may be referred to as proximity access scheduling. If an IP of the terminal is obtained in the solution, a preset IP library needs to be searched for a geographic location corresponding to the IP, and then a machine close to or closest to the geographic location of the terminal is allocated to provide services to the terminal. Document MEI LUO ET AL: "Research on resources scheduling technology based on fuzzy clustering analysis",FUZZY SYSTEMS AND KNOWLEDGE DISCOVERY (FSKD), 2012 9TH INTERNATIONAL CONFERENCE ON, IEEE, 29 May 2012 (2012-05-29), pages 152-155, XP032456046, proposes a scheduling model of task resources and its fuzzy membership function based on fuzzy clustering analysis algorithm.

In a research and practice process of the existing technology, the inventor of the present disclosure finds that in the existing access scheduling solution, access scheduling is performed based on the geographic location of the terminal, and in the solution, the obtained IP library, IP, or geographic location information may be accurate. Therefore, as a result, access scheduling of the terminal has relatively low accuracy, especially when faced with massive services.

SUMMARY

Embodiments of the present invention provide an access scheduling method and apparatus for a terminal and a computer storage medium, so as to improve accuracy of access scheduling of the terminal.

The present invention provides a method according to claim 1, an apparatus according to claim 11 and program code according to claim 15.

In the embodiments of the present invention, cluster division is performed on terminals, to obtain multiple terminal clusters; division is performed on machines providing resources, to obtain multiple machine clusters; then, resource demands of the terminal clusters, available resources of the machine clusters, and access quality between the terminal clusters and the machine clusters are obtained; coverage ratios of the machine clusters to the terminal clusters are obtained according to the resource demands of the terminal clusters, the available resources of the machine clusters, and the access quality; access scheduling is performed on the terminals according to the ratios. In the solution, access scheduling may be performed based on the available resources of the machine clusters, the resource demands of the terminal clusters, and the access quality between the terminal clusters and the machine clusters. It may be known that the scheduling solution gives consideration to both an access capacity and the access quality. Therefore, access scheduling of the terminals can be optimized, and accuracy of access scheduling of the terminals is improved relative to the existing technology.

BRIEF DESCRIPTION OF THE DRAWINGS

To more explicitly explain technical solutions in embodiments of the present invention, accompanying drawings needed in describing the embodiments are briefly introduced in the following. Apparently, the following accompanying drawings are only some embodiments of the present invention, and a person skilled in the art can derive other accompanying drawings from the accompanying drawings without creative effort.

FIG. 1 is a flowchart of an access scheduling method for a terminal according to a first embodiment of the present invention;
FIG. 2 is a flowchart of an access scheduling method for a terminal according to a second embodiment of the present invention;
FIG. 3a is a schematic structural diagram of an access scheduling apparatus for a terminal according to a third embodiment of the present invention; and
FIG. 3b is a schematic structural diagram of another access scheduling apparatus for a terminal according to the third embodiment of the present invention.

DESCRIPTION OF EMBODIMENTS

The following clearly and completely describes the technical solutions in the embodiments of the present invention with reference to the accompanying drawings in the embodiments of the present invention. Obviously, the described embodiments are only some embodiments instead of all embodiments of the present invention. All other embodiments obtained by a person of ordinary skill in the art based on the embodiments of the present invention without any creative effort fall within the protection scope of the present disclosure.

The embodiments of the present invention provide an access scheduling method and apparatus for a terminal. Detailed descriptions are provided below separately.

In the embodiments, descriptions are made from the perspective of an access scheduling apparatus. The access scheduling apparatus may be specifically integrated in a server or another device requiring access scheduling.

An access scheduling method for a terminal includes: performing cluster division on terminals, to obtain multiple terminal clusters; performing division on machines providing resources, to obtain multiple machine clusters; then obtaining resource demands of the terminal clusters, available resources of the machine clusters, and access quality between the terminal clusters and the machine clusters; obtaining coverage ratios of the machine clusters to the terminal clusters according to the resource demands of the terminal clusters, the available resources of the machine clusters, and the access quality; and performing access scheduling on the terminals according to the ratios.

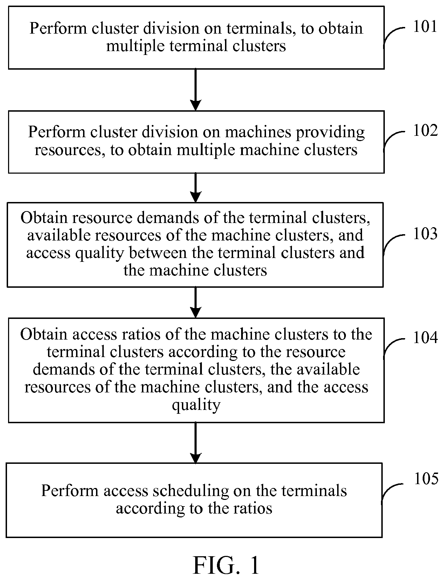

As shown in FIG. 1, a specific process of the access scheduling method for a terminal may be as follows:

Step 101: Perform cluster division on terminals, to obtain multiple terminal clusters.

There may be multiple division manners for the terminals. For example, division may be performed based on geographic locations of the terminals. That is, the performing cluster division on terminals may include: performing cluster division on the terminals according to geographic locations of the terminals.

The geographic locations of the terminals may include current geographic locations of the terminals or network registered home locations of the terminals. For example, cluster division may be performed according to areas (regions, cities, provinces, nations, and the like) in which the terminals are located or that are registered by a network. Specifically, terminals having the same areas in which the terminals are located or that are registered by a network are classified into the same terminal cluster.

For another example, in this embodiment, cluster division may be performed based on network addresses (such as IP addresses) of the terminals. That is, the performing cluster division on terminals may include: performing cluster division on the terminals according to network addresses of the terminals.

For example, division may be performed according to IP address segments, that is, according to the network addresses of the terminal. The performing cluster division on terminals may include: performing cluster division on the terminals according to IP address segments to which IP addresses of the terminals belong. For example, terminals whose IP addresses belong to the same preset IP address segments are divided into a terminal cluster.

To be applicable to scheduling of various scenarios to satisfy personalized demands, members in a terminal cluster in this embodiment may be a terminal or a combination of terminals, which may be specifically set according to actual demands.

In this embodiment, the terminal may be a device located at the outermost of a computer network in the network. That is, the terminal may be user equipment. For example, the terminal may be a personal computer, a mobile phone, a tablet computer, or other user equipments.

Step 102: Perform cluster division on machines providing resources, to obtain multiple machine clusters.

The machines providing sources may be servers or other devices capable of providing resources.

In this embodiment, there are multiple manners of dividing the machines. For example, division may be performed according to geographic locations of the machines. That is, the performing cluster division on machines providing resources may include:

performing cluster division on the machines according to geographic locations of the machines providing resources.

Specifically, cluster division may be performed according to areas (regions, cities, provinces, nations, and the like) in which the machines are located. For examples, machines located in a province are divided into a machine cluster.

In this embodiment, an order of step 101 and step 102 is not limited. For example, step 101 may be performed before step 102, or step 102 may be performed before step 101. Certainly, step 101 and step 102 may be simultaneously performed.

Step 103: Obtain resource demands of the terminal clusters, available resources of the machine clusters, and access quality between the terminal clusters and the machine clusters.

There are multiple manners of obtaining the resource demands of the terminal clusters. For example, the resource demands of the terminal clusters may be obtained based on historical request amounts of the terminal clusters. That is, the obtaining resource demands of the terminal clusters may include:

obtaining historical request amounts of the terminals in the terminal clusters;

obtaining resource demands of the terminals in the terminal clusters according to the historical request amounts; and

obtaining the resource demands of the terminal clusters according to the resource demands of the terminals in the terminal clusters.

For example, for a cluster having ten terminals, a historical request amount of each terminal may be obtained, and then the historical request amount of each terminal is analyzed, to obtain a resource demand of each terminal. Resources demands of the ten terminals are added, to obtain a resource demand of the cluster.

For another example, in this embodiment, the resource demands of the terminal clusters may be obtained in a manner of supervisor evaluation. That is, the obtaining resource demands of the terminal clusters may include: receiving the resource demands that are input by a user and that are of the terminal clusters.

Similarly, there may be multiple manners of obtaining the available resources of the machine clusters in this embodiment. For example, the available resources of the machine clusters may be obtained in a manner of a stress test. Specifically, a stress test is performed on the machines in the machine clusters, to obtain available resources of the machines, and then the available resources of the machine clusters are obtained according to the available resources of the machines in the machine clusters. In an actual test, to improve an obtaining speed and access scheduling efficiency, a stress test may be performed based on types of the machines, and then the available resources of the machine clusters may be obtained according to the number of different types of machines. That is, a process of obtaining the available resources of the machine clusters may include:

performing a stress test on different types of machines in the machine clusters, to obtain available resources of the different types of machines; and

obtaining the available resources of the machine clusters according to the available resources of the different types of machines and the number of the different types of machines.

For example, when a machine cluster includes: three machines b, four machines c, and five machines f, a stress test may be first performed on one machine b, machine c, and machine f in this embodiment, to obtain an available resource amount b1 of the machine b, an available resource amount c1 of the machine c, an available resource amount f1 of the machine f. Then, the available resource amount b1 is multiplied by the number 3 of the machines b, the available resource amount c1 is multiplied by the number 4 of the machines c, and the available resource amount f1 is multiplied by the number 5 of the machines f. at last, these products are added to obtain an available resource amount of the machine cluster. That is, the available resource amount of the machine cluster $= b1 \times 3 + c1 \times 4 + f1 \times 5$.

In this embodiment, the available resource amount may be obtained by using a manner of a stress test, or the available resource amount may be obtained based on historical operation information of the machines. That is, a process of obtaining the available resources of the machine clusters may include:

obtaining available resources of the machines according to historical operation information of machines in the machine clusters; and

obtaining the available resources of the machine clusters according to the available resources of the machines in the machine clusters.

The historical operation information may include: at least one of historical resource consumption information and a historical service handling capacity.

In an actual application, to improve a resource obtaining speed and improve access scheduling efficiency, in this embodiment, the available resources of the machine clusters may be obtained based on types and the number of the machines, including:

obtaining available resources of different types of machines according to historical operation information of the different types of machines in the machine clusters; and

obtaining the available resources of the machine clusters according to the available resources of the different types of machines and the number of the different types of machines.

The access quality between the terminal clusters and the machine clusters is network service quality from the terminal clusters to the machine clusters. Network service quality (that is, access quality) between the terminals and the machines may be obtained according to at least one of network performance parameters between the terminals and the machines, historical operation information between the terminals and the machines, and physical distances between the terminals and the machines, network addresses of the terminals, and network topology maps of network systems to which the terminals and the machines belong. The network performance parameters may include: network delay, a packet loss rate, delay jitter, and the like.

Step 104: Obtain access ratios of the machine clusters to the terminal clusters according to the resource demands of the terminal clusters, the available resources of the machine clusters, and the access quality.

Coverage ratios of the machine clusters to the terminal clusters are percentages of resources provided by the machine clusters to the terminal clusters to the resource demands of the terminal clusters. For example, a machine cluster 1 covers 30% of a terminal cluster 1, which means that a resource provided by the machine cluster 1 to the terminal cluster 1 occupies 30% of a resource demand of the terminal cluster 1. The machine cluster 1 covers 50% of a terminal cluster 2, which means that a resource provided by the machine cluster 1 to the terminal cluster 2 occupies 50% of a resource demand of the terminal cluster 2. The ratio may be represented by using $n_{ij}$, and $n_{ij}$ represents a coverage ratio of a machine cluster j to a terminal cluster i, and i and j are both positive integers greater than 1.

In this embodiment, there are multiple manners of obtaining the coverage ratios of the machine clusters to the terminal clusters according to the resource demands, the available resources, and the access quality. For example, that a sum of the resource demands of the terminal clusters for machine clusters is less than the available resources of the machine clusters is used as a restriction, and then the coverage ratios of the machine clusters to the terminal clusters may be obtained according to the restriction and the access quality between the terminal clusters and the machine clusters. That is, the obtaining coverage ratios of the machine clusters to the terminal clusters according to the resource demands of the terminal clusters, the available resources of the machine clusters, and the access quality may include:

obtaining the coverage ratios of the machine clusters to the terminal clusters according to a preset restriction and the access quality between the terminal clusters and the machine clusters, where the preset restriction includes: a sum of the resource demands of the terminal clusters for the machine clusters is less than or equal to the available resources of the machine clusters, and the sum of the resource demands is obtained according to the resource demands of the terminal clusters and the to-be-obtained ratios.

In this embodiment, the sum of the resource demands of the terminal clusters for the machine clusters is a sum of resources that the machine clusters need to provide to all the terminal clusters. For example, for the machine cluster 1, assuming that there are m terminal clusters, a sum of resource demands of the terminal clusters for the machine cluster 1 may be a sum of a resource that the machine cluster 1 needs to provide to the terminal cluster 1, a resource that the machine cluster 1 needs to provide to the terminal cluster 2, ... and a resource that the machine cluster 1 needs to provide to a terminal cluster m. The sum of the resource demands of the terminal clusters for the machine clusters may be obtained according to the resource demands of the terminal clusters and the coverage ratios of the machine clusters to the terminal clusters. For example, the sum of resource demands of the terminal clusters for the machine cluster 1 may be obtained according to a resource demand u1 of the terminal cluster 1 and a coverage ratio $n_{11}$ of the machine cluster 1 to the terminal cluster 1, a resource demand u2 of the terminal cluster 2 and a coverage ratio $n_{21}$ of the machine cluster 1 to the terminal cluster 2, ... and a resource demand um of the terminal cluster m and a coverage ratio $n_{m1}$ of the machine cluster 1 to the terminal cluster m. specifically, the sum of resource demands of the terminal clusters for the machine a1 $=u1 \times n_{11} + u2 \times n_{21} + ... + um \times n_{m1}$, where m and n are positive integers both greater than 1.

Specifically, a resource demand set, an available resource set, and an access quality set may be obtained. The resource demand set includes the resource demands of the multiple terminal clusters, the available resource set includes the available resources of the multiple machine clusters, and the access quality set includes the access quality between the multiple terminal clusters and the multiple machine clusters. Then, a ratio set is obtained according to the preset restriction and the access quality set. The ratio set includes the coverage ratios of the multiple machine clusters to the multiple terminal clusters. The preset restriction includes: the sum of the resource demands of the terminal clusters to the machine clusters is less than the available resources of the machine clusters.

For example, assuming that there are m terminal clusters and n machine clusters, a resource demand u of each terminal cluster may be obtained, to obtain a resource demand set U. U includes u1, u2, u3, ... ui, ... um, where ui represents the size of a resource demand of a terminal cluster i, and i is less than m. An available resource a of each machine cluster is obtained, to obtain an available resource set A. A includes a1, a2, a3, ... aj, ... an, where aj represents a size of an available resource of a machine cluster j, and j is less than n. Access quality d between each terminal cluster and each machine cluster is obtained, to obtain an access quality set D. D includes: $d_{11}, d_{12}, d_{13}, ... d_{1n}, d_{21}, d_{22}, ... d_{2n}, ... , d_{m1}, d_{m2}, ... , d_{mn}$, where $d_{ij}$ represents access quality between the terminal cluster i and the machine cluster j. Assuming that a to-be-obtained ratio is $n_{ij}$, which represents a coverage ratio of the machine cluster j to the terminal cluster i, in this case, the preset restriction includes: $Qi \leq ai$, where Qi represents a sum of resource demands of the terminal clusters to the machine cluster i, and $Qi = u1 \times n_{1i} + u2 \times n_{2i} + , ... + um \times n_{mi}$, and then $n_{ij}$ is obtained according to the preset restriction and the access quality set D, to obtain a ratio set N, N including: $n_{11}, n_{12}, n_{13}, ... n_{1n}, n_{21}, n_{22}, ... n_{2n}, ... , n_{m1}, n_{m2}, ... , n_{mn}$.

In an implementation, to improve a resource utilization of a system and business service quality, in this embodiment, a ratio when a sum of the access quality in the access quality set is the maximum may be obtained. That is, that the sum of the access quality between the terminal clusters and the machine clusters is the maximum is used by default as optimal scheduling. In this case, the obtaining the coverage ratios of the machine clusters to the terminal clusters according to a preset restriction and the access quality between the terminal clusters and the machine clusters may include:

obtaining a ratio set according to a preset constraint, an access quality set, and the preset restriction, where the access quality set includes access quality between the multiple terminal clusters and the multiple machine clusters, and the ratio set includes the coverage ratios of the machine clusters to the terminal clusters; and

the preset constraint includes: the sum of the access quality in the access quality set is the maximum.

For example, when the sum of access quality $d_{ij}$ in the access quality set D is the maximum, $n_{ij}$ is obtained according to the preset restriction and the access quality set D, to obtain the ratio set N.

In an actual application, to conveniently and fast obtain the coverage ratios of the machine clusters to the terminals, the ratio set may be calculated in a matrix operation manner. That is, obtaining of the coverage ratio set of the machine clusters to the terminals is converted into a problem of solving a matrix. For example, a corresponding matrix may be created according to the access quality set, and a corresponding weight matrix is obtained according to a preset constraint, the matrix, and the preset restriction. A matrix element in the weight matrix represents the coverage ratios of the machine clusters to the terminal clusters. That is, the obtaining a ratio set according to a preset constraint, an access quality set, and the preset restriction may include:

creating a corresponding quality matrix according to the access quality set, where a matrix element in the quality matrix represents the access quality between the terminal clusters and the machine clusters; and obtaining a corresponding weight matrix under the preset constraint according to the quality matrix and the preset restriction, where a matrix element in the weight matrix represents the coverage ratios of the machine clusters to the terminal clusters; and in this case, the following step 105 of performing access scheduling on the terminals according to the ratios may include: performing access scheduling on the terminals according to the weight matrix.

For example, a corresponding resource demand matrix $U_m$ is created according to the resource demand set U and is also referred to as a user vector $U_m$ ($u_i$ represents the size of the resource demand of the terminal cluster i):

$$U_m = \begin{bmatrix} u_1, & u_2, & \cdots & \cdots & u_m \end{bmatrix}.$$

A corresponding resource demand matrix $A_n$ is created according to the available resource set A and is also referred to as a resource vector $A_n$ ($a_j$ represents the size of the available resource of the machine cluster j):

$$A_n = \begin{bmatrix} a_1, & a_2, & \cdots & \cdots & a_n \end{bmatrix}.$$

A corresponding access quality matrix $D_{m \times n}$ is created according to the access quality set and may also be referred to as an access quality vector $D_{m \times n}$ ($d_{ij}$ represents the access quality between the terminal cluster i and the machine cluster j):

$$D_{m \times n} = \begin{bmatrix} d_{1,1} & d_{1,2} & \cdots & d_{1,n} \\ d_{2,1} & \cdots & \cdots & \vdots \\ \vdots & \cdots & \cdots & \vdots \\ d_{m,1} & \cdots & \cdots & d_{m,n} \end{bmatrix},$$

where $d_{ij}$ may be a logic distance between the terminal i and the machine cluster j, the logic distance represents the access quality between the terminal cluster i and the machine cluster j, a longer logic distance represents greater (that is, better) access quality, and a shorter logic distance represents smaller (that is, worse) access quality.

It is assumed that a to-be-solved weight matrix is $N_{m \times n}$, $n_{ij}$ representing the coverage ratio of the machine cluster j to the terminal cluster i. To ensure that an allocated resource does not exceed the available resource, the resource restriction may be added, and the resource restriction includes: for each machine cluster, the sum of resource demands of the terminal clusters for the machine cluster is less than or equal to an available resource of the machine cluster, that is, $U_m \times N_{m \times n} \leq A_n$.

To improve business service quality and ensure reasonableness of access scheduling, in this embodiment, that the sum of the access quality between the terminal clusters and the machine clusters is the maximum may be used as optimal scheduling. For example, when $d_{ij}$ may be the logic distance between the terminal i and the machine cluster j, that the sum of logic distances is the minimum is used as optimal scheduling. That is, a constraint that the sum of the access quality between the terminal clusters and the machine clusters is the maximum is added when $N_{m \times n}$ is calculated. That the sum of the access quality between the terminal clusters and the machine clusters is the maximum may be represented by the access quality matrix $D_{m \times n}$ and the to-be-obtained weight matrix $N_{m \times n}$. For example, that the sum of the access quality is the maximum may be represented when

$$w = \left| D_{m \times n} \times N_{m \times n}^T \right|$$

is the minimum or the maximum. Specifically, when larger $d_{ij}$ represents greater (that is, better) access quality, the preset constraint may be that

$$w = \left| D_{m \times n} \times N_{m \times n}^T \right|$$

is the maximum; when larger $d_{ij}$ represents smaller (that is, worse) access quality, the preset constraint may be that $w = \left| D_{m \times n} \times N_{m \times n}^T \right|$ is the minimum.

After the access quality vector $D_{m \times n}$, the resource restriction $U_m \times N_{m \times n} \leq A_n$, and the constraint that $w = \left| D_{m \times n} \times N_{m \times n}^T \right|$ is the maximum or the minimum are obtained, the weight matrix $N_{m \times n}$ when $w = \left| D_{m \times n} \times N_{m \times n}^T \right|$ is the maximum or the minimum may be solved. That is, the coverage ratios of the machine clusters to the terminal clusters may be obtained.

Step 105: Perform access scheduling on the terminals according to the ratios.

In this embodiment, when the ratio set is obtained in step 104, access scheduling may be performed on the terminals according to the ratio set.

Specifically, the performing access scheduling on the terminals according to the ratios may include:

determining, according to the ratios, target machine clusters to which the terminal clusters are accessed; and

determining from the target machine clusters target machines to which the terminals in the terminal clusters need to be accessed.

For example, a target machine cluster to which the terminal cluster 1 is accessed may be obtained according to the coverage ratio $n_{11}$ of the machine cluster 1 to the terminal cluster 1, the coverage ratio $n_{12}$ of the machine cluster 2 to the terminal cluster 1, ... the coverage ratio $n_{1n}$ of a machine cluster n to the terminal cluster 1.

In this embodiment, an operation may be performed on the ratios by using a preset algorithm, to obtain an operation result, and the target machine clusters to which the terminal clusters are accessed are determined according to the operation result. The preset algorithm may be set according actual demands. For example, the preset algorithm may be a weighting algorithm.

In an implementation, to satisfy personalized operation demands, in this embodiment, the resource demands, the available resources, and the access quality may also be adjusted. Specifically, to reduce the pressure of the machine clusters and improve business service quality, it is usually expected to reserve resources. That is, it is not expected that resource utilizations of the machine clusters are 100%. For another example, to prevent resources from being wasted and improve the resource utilization, it is expected that resource utilizations of some machine clusters may be higher. For example, an oversea machine cluster only utilizes 60% of resources, which is wasteful, and is expected to utilize 90%. In this case, in this embodiment, the available resources of the machine clusters may be processed by using the resource utilizations. That is, the obtaining coverage ratios of the machine clusters to the terminal clusters according to the resource demands of the terminal clusters, the available resources of the machine clusters, and the access quality may include:

processing the available resources of the machine clusters according to preset resource utilization upper limits of the machine clusters to obtain available resource upper limits of the machine clusters; and obtaining the coverage ratios of the machine clusters to the terminal clusters according to the resource demands of the terminal clusters, the available resource upper limits of the machine clusters, and the access quality.

The preset resource utilization upper limits represent resource utilization upper limits of the machine clusters.

For example, the available resources of the machine clusters may be multiplied by the preset resource utilization upper limits of the machine clusters, to obtain the available resource upper limits of the machine clusters. Assuming that the preset resource utilization upper limit of the machine cluster n is $r_n$, in this case, the available resource upper limit of the machine cluster n is $a_n' = a_n \times r_n$.

For another example, when the ratios are solved by using a matrix operation, a resource utilization vector $R_n$ may be added:
$R_n = [r_1, r_2, \cdots r_n]$, where $r_j$ is a preset resource utilization upper limit of the machine cluster j.

Before the weight matrix is solved, $A_n$ may be preprocessed. Specifically, an available resource of each machine cluster in $A_n$ is multiplied by a corresponding preset resource utilization upper limit, to obtain an available resource upper limit, that is, $a_n' = a_n \times r_n$. Then, the weight matrix is calculated by replacing $a_n$ with $a_n'$.

A process of obtaining the ratios according to the resource demands, the available resource upper limits, and the access quality is similar to step 104 and only differs in that one process involves the available resources, and the other one involves the available resource upper limits; the available resources of the machine clusters are replaced with the available resource upper limits.

In this embodiment, the resource utilization upper limits are set, that is, the sizes of the available resources are strictly limited. Therefore, a problem that obtaining of the ratios fails (that is, there is no solution for resource allocation; for example, there is no solution for the weight matrix) or scheduling accuracy gets worsen may exist. For example, for a large machine cluster, a stable operation demand is that whole resource consumption is approximately 60%. However, when a demand amount for this point increases, it is needed that a carrying capacity at this point temporarily exceeds 60% of resources, rather than no solution provided for allocation due to insufficient resources.

To overcome the foregoing problem and complete scheduling by fully utilizing the resources of the machine clusters, in the method in this embodiment, preset resource utilization absolute upper limits of the machine clusters may be added, and the available resource upper limits of the machine clusters are processed by using the utilization rate. Then, the ratios may be obtained based on the processed available resource upper limits, the access quality, and the resource demands. That is, the method in this embodiment may further include:

> processing the available resource upper limits of the machine clusters according to preset resource utilization absolute upper limits when obtaining of the access ratios of the machine clusters to the terminal clusters fails, to obtain available resource absolute upper limits of the machine clusters, where the preset resource utilization absolute upper limits are greater than preset resource utilization upper limits; and

> obtaining the coverage ratios of the machine clusters to the terminal clusters according to the resource demands of the terminal clusters, the available resource absolute upper limits of the machine clusters, and the access quality.

The preset resource utilization absolute upper limit is an absolute upper limit of a resource utilization, which is greater than an upper limit of the resource utilization.

For example, the available resource upper limits of the machine clusters may be multiplied by the preset resource utilization absolute upper limits of the machine clusters, and then products are divided by the preset resource upper limits, to obtain the available resource absolute upper limits of the machine clusters. That is, the available resources of the machine clusters are multiplied with the preset resource absolute upper limits of the machine clusters. Assuming that a preset resource utilization upper limit of the machine cluster n is $r_n$, and a preset resource utilization absolute upper limit is $r_n{'}$, when obtaining of the ratios fails, the available resource upper limit of the machine cluster may be processed by using $r_n{'}$. For example, the available resource absolute upper limit of the machine cluster n is $a_j{''}= a_j{'} \times \dfrac{r_j{'}}{r_j}$ , and then the ratios are re-obtained according to the available resource absolute upper limits of the machine clusters, the access quality, and the resource demands.

There are multiple situations in which obtaining of the ratios fails. For example, in a process of obtaining the ratios, it is found that failure of obtaining of the ratios results from that the preset restriction cannot be satisfied.

That is, the sum of the resource demands of the terminal clusters for the machine clusters is greater than the available resource upper limits of the machine clusters. In this case, the available resource upper limits of the machine clusters may be processed by using the preset resource utilization absolute upper limits of the machine clusters to obtain the available resource absolute upper limits of the machine clusters, and then the ratios are re-obtained according to the available resource absolute upper limits, the resource demands, and the access quality.

For example, when the ratios are solved by using the matrix operation, the resource utilization vector $R_n{'}$ may be added, where $r_j{'}$ represents the preset resource utilization absolute upper limit of the machine cluster j.

When the weight matrix is solved, it is found that

$$\mathrm{Um} * \sum_{i=1}^{m} n_{i,j} \leq a_j{'}$$

when for the machine cluster j, m cannot be satisfied, that is, the available resource upper limit of the machine cluster j satisfies the resource demands of the terminals, $a_j{'}$ may be processed by using $r_j{'}$. For example, the available resource absolute upper limit $a_j{''}$ of the machine cluster j is calculated by using a formula $a_j{''}= a_j{'} \times \dfrac{r_j{'}}{r_j}$ , and then, the weight matrix is solved. $(r_j{'} - r_j)$ is a capacity expansion demand of the machine cluster j. This embodiment may record the capacity expansion demand, so as to subsequently perform capacity expansion based on the capacity expansion demand.

In this embodiment, a process of obtaining the ratios according to the resource demands, the available resource absolute upper limits, and the access quality is similar to step 104 and only differs in that one process involves the available resources, and the other one involves the available resource absolute upper limits; the available resources of the machine clusters may be replaced with the available resource upper limits to obtain the ratios.

In an implementation, to ensure that some terminal clusters may preferentially obtain resources, for example, when machine division is performed on the terminals according to provinces, to ensure that terminals in Guangdong obtain resources prior to those in Guangxi, in this case, resource obtaining priorities may be introduced in this embodiment. A corresponding resource obtaining priority may be set for each terminal cluster. The resource obtaining priorities may also be considered during access scheduling. That is, obtaining the access ratios of the machine clusters to the terminal clusters according to a preset restriction and the access quality between the terminal clusters and the machine clusters may include:

obtaining the coverage ratios of the machine clusters to the terminal clusters according to the resource demands of the terminal clusters, the available resource absolute upper limits of the machine clusters, and the access quality.

In this embodiment, the obtaining the coverage ratios of the machine clusters to the terminal clusters according to the resource demands of the terminal clusters, the available resource absolute upper limits of the machine clusters, and the access quality may include: obtaining a ratio set according to a preset constraint, an access quality set, a priority set, and the preset restriction, where the access quality set includes access quality between the multiple terminal clusters and the multiple machine clusters, the ratio set includes the coverage ratios of the machine clusters to the terminal clusters, and the priority set includes resource obtaining priorities of the multiple machine clusters.

The resource obtaining priorities of the machine clusters may be obtained according to attributes of the machine clusters, and specifically, may be obtained according to the geographic locations of the machines. For example, a resource obtaining priority of a machine cluster in Guangdong is higher than that in Jiangxi.

When the ratios are calculated by using a matrix, the obtaining a ratio set according to a preset constraint, an access quality set, a priority set, and the preset restriction may include:

creating a corresponding quality matrix according to the access quality set, where a matrix element in the quality matrix represents the access quality between the terminal clusters and the machine clusters;

creating a corresponding priority matrix according to the priority set, where a matrix element in the priority matrix represents the resource obtaining priorities corresponding to the terminal clusters; and

obtaining a corresponding weight matrix according to the preset constraint, the quality matrix, the priority matrix, and the preset restriction.

For example, in a process of calculating the ratios (that is, the weight matrix) by using a matrix, a priority vector $P_m$ may be added, where $p_i$ represents a resource obtaining priority of the terminal cluster i. in this case, the ratios may be obtained by solving a weight matrix $N_{m \times n}$ when $w = \left| \left( D_{m \times n} \times N_{m \times n}^T \right) \times P_m \right|$ is the minimum.

In an implementation, to satisfy scheduling demands of manual intervention and resolve a problem of conflict between automatic scheduling and manual adjustment, for example, a problem that all American resources need to cover the whole nation or 30% of telecom users in Guangdong are accessed to a telecom machine cluster in Shenzhen, in the method in this embodiment, manual adjustment may be preferentially ensured. That is, the preset constraint in this embodiment may further include:

some of the ratios in the ratio set are predetermined ratios.

For example, it is limited that a coverage ratio $n_{11}$ of the machine cluster 1 to the terminal cluster 1 is 30%, and a coverage ratio $n_{21}$ of the machine cluster 1 to the terminal cluster 2 is 20%.

For example, in the process of calculating the ratios by using the matrix, before calculation, some values of the solved vector $N_{m \times n}$ are initialized. For example, it is set that $n_{11}=30\%$, where $n_{11}$ may represent a coverage ratio of a telecom machine cluster in Shenzhen to a telecom machine cluster in Guangdong, and then subsequent calculation of solving the weight matrix may be performed.

In an implementation, to satisfy the capacity expansion demand and accurately expand a capacity of a system, after the obtaining coverage ratios of the machine clusters to the terminal clusters, the method in this embodiment may further include:

obtaining the sum of the resource demands of the terminal clusters for the machine clusters according to the ratios and the resource demands of the terminal clusters;

obtaining resource differences between the sum of the resource demands and the available resources of the machine clusters; and

performing, according to the resource differences, capacity expansion on a system to which the machine clusters belong.

For example, assuming that Qi represents the sum of the resource demands of the terminal clusters for the machine cluster i, $Qi=u1 \times n_{1i}+u2 \times n_{2i}+, ... + um \times n_{mi}$, where ui is a resource demand of the terminal cluster i, and $n_{ji}$ is a coverage ratio of the machine cluster i to the terminal cluster. In this case, a resource difference between the sum Qi of demands of the terminal clusters for the machine cluster i and the machine cluster i, that is, ci=ai-Qi, where ci represents a resource difference corresponding to the machine cluster i. Similarly, resource differences corresponding to other machine clusters, for example, a resource difference c1 corresponding to the machine cluster 1, a resource difference c2 corresponding to the machine cluster 2, ... a resource difference cn corresponding to the machine cluster n may be obtained. Then, capacity expansion is performed on the system based on the resource differences corresponding to the machine clusters. For example, a sum of all the resource differences is obtained, that is, c=c1+c2, ... +cn, and then capacity expansion is performed based on c.

During actual capacity expansion, there are two situations. One situation is capacity expansion with no user-expected increase, and the other situation is capacity expansion with a user-expected increase. The situations may be generalized as processing the resource demands of the terminal clusters. For example, during a matrix operation, the resource demand vector $U_m$ may be adjusted. Specifically, the resource demands may be processed according to terminal-expected increments. That is, the obtaining coverage ratios of the machine clusters to the terminal clusters according to the resource demands of the terminal clusters, the available resources of the machine clusters, and the access quality may include:

processing the resource demands of the terminal clusters according to terminal-expected increments corresponding to the terminal clusters, to obtain expected resource demands of the terminal clusters; and

obtaining the coverage ratios of the machine clusters to the terminal clusters according to the expected resource demands of the terminal clusters, the available resources of the machine clusters, and the access quality.

The ratios in this case are ratios when the terminal-expected increments are considered. Then, the resource differences may be obtained according to the ratios and the resource demands of the terminal clusters, and capacity expansion is performed based on the resource differences. In this way, a capacity expansion demand of machine clusters when there is a terminal-expected increase can be obtained, to provide reference for capacity expansion, and capacity expansion is performed based on the capacity expansion demand, to improve accuracy of capacity expansion and a resource utilization.

In this embodiment, a process of obtaining the ratios according to expected resource demands, the available resources, and the access quality is similar to step 104 and only differs in that one process involves the resource demands, and the other one involves the expected resource demands; the resource demands of the terminal clusters may be replaced with the expected resource demands to obtain the ratios.

The terminal-expected increments may be terminal increase ratios. In this case, expected increments may be multiplied by the resource demands sent by the terminals, to obtain the expected resource demands of the terminal clusters. For example, for the terminal cluster i, the expected resource demand of the terminal cluster i is $ui''=ui\times ui'$, where $ui'$ is an terminal-expected increment, and $ui$ is an available resource of the terminal cluster i.

For example, when the ratios are solved by using the matrix operation, a vector $Ui'$ may be added, where $ui'$ represents the terminal-expected increment of the terminal cluster i. Before the weight matrix is solved, $ui$ is processed by using $ui'$, to obtain the expected resource demand $ui''$ of terminal cluster i, where $ui''=ui\times ui'$; then the weight matrix is solved after $ui$ is replaced with $ui''$.

In an implementation, during actual capacity expansion, usually, there is a limitation for capacity expansion of a system. That is, in some cases, only resources of particular machine clusters can be applied. Even during capacity expansion, resources at some points need to be removed, some points can apply only the fixed number of machines, and resources at some points are abundant enough to almost completely satisfy demands. Therefore, during capacity expansion, constraints of resources need to be considered. That is, the resource increments are limited. In this embodiment, constraints of capacity expansion resources may be generalized as adjusting the available resources of the machine clusters. That is, the obtaining coverage ratios of the machine clusters to the terminal clusters according to the resource demands of the terminal clusters, the available resources of the machine clusters, and the access quality may include:

processing the available resources of the machine clusters according to preset resource increments of the machine clusters to obtain target available resources of the machine clusters; and

obtaining the coverage ratios of the machine clusters to the terminal clusters according to the resource demands of the terminal clusters, the target available resources of the machine clusters, and the access quality.

The resource increments may be resource increase ratios. In an implementation, the preset resource increment may include: a preset resource increment upper limit and a preset resource increment absolute upper limit. The preset resource increment upper limit is an upper limit of a machine cluster resource increase, and the preset resource increment absolute upper limit is an absolute upper limit of the machine cluster resource increase. In this case, the available resources of the machine clusters may be processed according to the preset resource increment upper limits and the preset resource increment absolute upper limits, to obtain target available resources of the machine clusters (assuming that $g_j$ is a preset resource upper limit increase ratio, and $h_j$ is a preset resource absolute upper limit increase ratio, in this case, the target available resource of the machine cluster is $a_j'''=a_j\times g_j+h_j$). Then, the ratios are obtained based on the target available resources, the resource demands, and the access quality. In this way, the ratios when a resource increase amount is limited can be obtained in the method in this embodiment. Then, the sum of the resource demands of the terminal clusters for the machine clusters is obtained according to the ratios and the resource demands of the terminal clusters, and the resource differences between the sum of the resource demands and the available resources of the machine clusters are obtained. In this way, in this embodiment, the capacity expansion demands of the machine clusters when the resource increments are limited can be obtained, to provide parameters to capacity expansion. Then, capacity expansion may be performed on the system based on the capacity expansion demands, to improve accuracy of capacity expansion and improve the resource utilization.

For example, when the ratios are solved by using the matrix operation, a vector $Gn=[g_1, g_2, ... g_n]$ and a vector $Hn=[h_1, h_2, ... h_n]$ may be added, where an element $g_j$ in Gn represents a preset resource upper limit increase ratio of the machine cluster j, an element $h_j$ in Hn represents a preset resource absolute upper limit increase ratio of the machine cluster j, and that $h1=1$ represents that the machine cluster has no resource increase demands. Before the weight matrix is solved, $a_j$ is processed by using $g_j$ and $a_j$, to obtain a target available resource $a_j'''$ of the machine cluster j, where $a_j''' = a_j \times g_j + h_j$; then, the weight matrix is solved after replacing $a_j$ with $a_j'''$ in the vector An.

In an implementation, the method in this embodiment may be applicable to capacity reduction evaluation. In this case, the preset resource upper limit increase ratio or preset resource absolute upper limit increase ratio may be less than 1 or may be a negative number.

It can be known from the above that in this embodiment of the present invention, cluster division is performed on terminals, to obtain multiple terminal clusters; division is performed on machines providing resources, to obtain multiple machine clusters; then, resource demands of the terminal clusters, available resources of the machine clusters, and access quality between the terminal clusters and the machine clusters are obtained; coverage ratios of the machine clusters to the terminal clusters are obtained according to the resource demands of the terminal clusters, the available resources of the machine clusters, and the access quality; access scheduling is performed on the terminals according to the ratios. In the solution, access scheduling may be performed based on the available resources of the machine clusters, the resource demands of the terminal clusters, and the access quality between the terminal clusters and the machine clusters. It may be known that the scheduling solution gives consideration to both an access capacity and the access quality. Therefore, access scheduling of the terminals can be optimized, and accuracy of access scheduling of the terminals is improved relative to the existing technology.

In addition, in this embodiment of the present invention, the constraint of the access quality is added to obtain the ratios, ensuring that the whole access quality of the scheduling solution is optimal and improving the resource utilization and business service quality after access, so as to improve user experience. In addition, in this embodiment of the present invention, the resource differences between the available resources and the resource demands may be obtained, and capacity expansion may be performed according to the resource differences, to provide parameters to capacity expansion and automatically output a capacity expansion solution, so as to improve a speed and accuracy of system capacity expansion.

Further, in this embodiment of the present invention, the resource demands, the available resources, and the like may be adjusted according to actual operation demands (a resource use demand, a manual intervention demand, a capacity expansion demand, and the like), so that the access scheduling method in this embodiment can satisfy various personalized demands, and the method has advantages including wide application, strong flexibility, easy expansion, and the like.

According to the method described in the first embodiment, the following further provides detailed descriptions by using an example.

In this embodiment, detailed descriptions are provided by using an example in which the access scheduling apparatus is specifically integrated in a scheduling server, and the machines providing resources are servers.

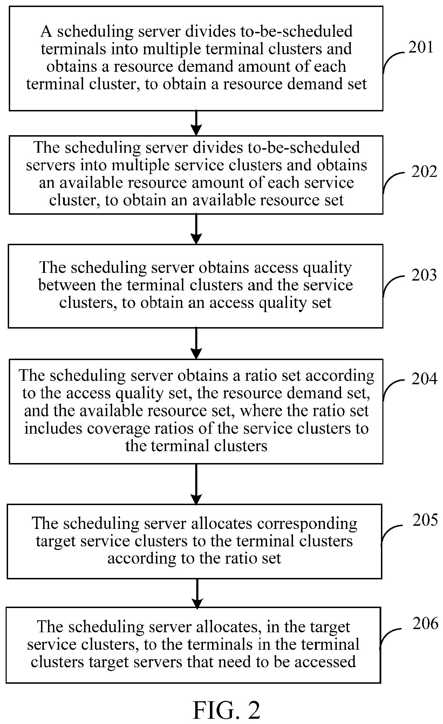

As shown in FIG. 2, a specific process of an access scheduling method for a terminal may be as follows:

Step 201: A scheduling server divides to-be-scheduled terminals into multiple terminal clusters and obtains a resource demand amount of each terminal cluster, to obtain a resource demand set.

The resource demand set includes a resource demand amount of each terminal cluster. In this embodiment, the terminal may be a device located at the outermost of a computer network in the network. That is, the terminal may be user equipment. For example, the terminal may be a personal computer, a mobile phone, a tablet computer, or other user equipments.

Specifically, the scheduling server may perform cluster division on the terminals according to geographic locations or network addresses of the terminals. For example, the scheduling server performs cluster division on the terminals according to provinces in which the terminals are located.

In this embodiment, the resource demand amounts of the terminal clusters may be obtained according to resource demand amounts of the terminals in the terminal clusters, and for example, are a sum of the resource demand amounts of the terminals in the clusters. Resource demands of the terminals may be obtained through analysis according to historical request amounts, and new services may be obtained according to a manner such as subjective evaluation.

For example, the scheduling server divides the terminals into m terminal clusters, and then obtains a resource demand amount u1 of a terminal cluster 1, a resource demand amount u2 of a terminal cluster 2, ... a resource demand amount i of a terminal cluster i, and a resource demand amount um of a terminal cluster m. In this case, a set u=(u1, u2, ... ui, ... um) may be obtained.

When a ratio set is calculated by using a matrix model, the resource demand set may be converted into a corresponding resource demand matrix. For example, the set u is converted into a resource matrix $U_m$, and $U_m$ may be also referred to as a resource vector:

$U_m = [u_1, u_2, ...... u_m]$, where $u_i$ represents the resource demand amount of the terminal cluster i.

In an implementation, in a scenario of capacity expansion with a terminal-expected increase, to satisfy personalized demands of capacity expansion, the resource demand amounts of the terminal clusters may also be adjusted. Specifically, the resource demand amounts of the terminal clusters are adjusted according to terminal-expected increments corresponding to the terminal clusters. For example, when the terminal-expected increments are terminal-expected increase ratios, the resource demand amounts of the terminal clusters may be multiplied with the expected increase ratios corresponding to the clusters.

For example, assuming that a terminal-expected increase ratio of the terminal cluster i is ui', if there is no increase,

$$u_i^{'} = 1$$

. When the resource demand amount is ui, in this embodiment, ui may be initialized by using ui', and specifically, it is made that $u_i = u_i \times u_i^{'}$. In this case, ui is an expected available resource of the terminal cluster i.

For another example, in the matrix model, a vector $U_m'$ may be added in this embodiment, where uj' expresses the terminal-expected increase ratio of the terminal cluster j. In this case, each element in the vector $U_m$ may be initialized by using the formula $u_i = u_i \times u_i^{'}$.

Step 202: The scheduling server divides to-be-scheduled servers into multiple service clusters and obtains an available resource amount of each service cluster, to obtain an available resource set.

The available resource set includes an available resource amount of each terminal cluster.

Specifically, the scheduling server may divide the servers according to attributes of the servers, and for example, may divide the servers according to areas to which the servers belong or geographic locations of the servers.

The available resource amounts of the service clusters may be obtained according to available resource amounts of servers in the service clusters, and for example, are a sum of available resources of the servers in the clusters. There are multiple manners of obtaining the available resource amounts of the servers. For example, the available resource amounts of the servers are obtained by performing a stress test on the servers, or the available resource amounts of the servers may be obtained by analyzing historical operation information of the servers.

For example, the scheduling server divides the servers into n service clusters, and then the scheduling server obtains an available resource amount of each service cluster. Specifically, the scheduling server obtains an available resource amount a1 of a service cluster 1, an available resource amount a2 of a service cluster 2, ... an available resource amount aj of a service cluster j, ..., and an available resource amount an of a service cluster n. In this case, an available resource set A=(a1, a2, ... aj, ... am) may be obtained.

When a ratio set is calculated by using the matrix model, the available resource set may be converted into a corresponding available resource matrix. For example, the set A is converted into a resource matrix $A_n$, and the resource matrix $A_n$ may be also referred to as a vector $A_n$:

$A_n=[a_1, a_2, ...... a_n]$, where aj represents the available resource amount of the service cluster j.

In an implementation, to satisfy the resource use demand of limiting the service clusters, for example, to satisfy that resource utilizations of all service clusters are approximately 70%, and resource utilizations of some service clusters reach 80%, in this embodiment, the available resource amounts of the service clusters may also be adjusted. Specifically, available resources of the service clusters may be adjusted according to resource utilization upper limits of the service clusters. For example, the available resources may be initialized according to the resource utilization upper limits, and the resource utilization upper limits are resource utilization upper limits of the service clusters.

For example, assuming that a resource utilization upper limit of the service cluster j is rj, the available resource amount aj of the service cluster j may be initialized by using rj. Specifically, it may be made that aj=aj×rj. In this case, aj is an available resource upper limit amount of the service cluster j. In this case, an available resource set A is an available resource upper limit set A.

For another example, in the matrix model, a vector Rn may be added in this embodiment, where rj expresses the resource utilization upper limit of the service cluster j. In this case, each element in the vector $A_n$ may be initialized by using the formula aj=aj×rj.

In an implementation, in a scenario of capacity expansion with a resource constraint, the available resource amounts of the service clusters may be adjusted. Specifically, the available resource amounts of the service clusters may be adjusted according to resource increments corresponding to the service clusters. The resource increments may include upper limit resource increments and absolute upper limit resource increments, and the increments may be increase ratios.

For example, assuming that a resource increase upper limit ratio of a service cluster i is $g_i$, and a resource increase absolute upper limit ratio is $h_i$, in this case, an available resource amount a of the service cluster i may be initialized by using g; and $h_i$. Specifically, it is made that $a_i= a_i \times g_i + h$. In this case, ai is a target available resource of the service cluster i.

For another example, in the matrix model, a vector Gn=[$g_1$, $g_2$, ... $g_n$] and a vector Hn=[$h_1$, $h_2$, ... $h_n$] may be added, where an element $g_j$ in Gn represents a preset resource upper limit increase ratio of the service cluster j, an element $h_j$ in Hn represents a preset resource absolute upper limit increase ratio of the service cluster j, and that h1=1 represents that the service cluster has no resource increase demands. Each element in the vector An is initialized by using the formula $a_i= a_i \times g_i + h_i$.

Step 203: The scheduling server obtains access quality between the terminal clusters and the service clusters, to obtain an access quality set.

The access quality set includes: access quality between each terminal cluster and each service cluster.

The access quality between the terminal clusters and the service clusters may be network service quality from the terminal clusters to the service clusters. Network service quality (that is, access quality) between the terminals and the servers may be obtained according to at least one of network performance parameters between the terminals and the services, historical operation information between the terminals and the services, and physical distances between the terminals and the services, network addresses of the terminals, and network topology maps of network systems to which the terminals and the services belong. The network performance parameters may include: network delay, a packet loss rate, delay jitter, and the like.

For example, when there are m terminal clusters and n service clusters, access quality $d_{11}$ between a terminal cluster 1 and a service cluster 1, access quality $d_{12}$ between the terminal cluster 1 and a service cluster 2, ... and access quality $d_{mn}$ between a terminal cluster m and a service cluster n may be obtained. In this case, an access quality set D=($d_{11}$, $d_{12}$, $d_{13}$, ... $d_{1n}$, $d_{21}$, $d_{22}$, ... $d_{2n}$, ... , $d_{m1}$, $d_{m2}$, ... , $d_{mn}$) may be obtained, where $d_{ij}$ represents access quality between a terminal cluster i and a service cluster j.

When a ratio set is calculated by using the matrix model, the access quality set may be converted into a corresponding access quality matrix. For example, the set D is converted into a access quality matrix $D_{m \times n}$, and $D_{m \times n}$ may be also referred to as an access quality vector:

$$\text{User}\;\; D_{m \times n} = \overset{\text{Resource}}{\begin{bmatrix} d_{1,1} & d_{1,2} & \cdots & d_{1,n} \\ d_{2,1} & \cdots & \cdots & \vdots \\ \vdots & \cdots & \cdots & \vdots \\ d_{m,1} & \cdots & \cdots & d_{m,n} \end{bmatrix}},$$

where $d_{ij}$ represents access quality between the terminal cluster i and the service cluster j.

For ease of calculation, in this embodiment, logic distances between the terminal clusters and the service clusters may also be used to express the access quality. In this case, the access quality matrix may be a logic distance matrix. For example, in this case, $D_{m \times n}$ may be a logic distance matrix, where $d_{ij}$ is the logic distance between the terminal cluster i and the service cluster j. The logic distance represents access quality between the terminal cluster i and the service cluster j. A shorter logic distance represents greater or better access quality.

Step 204: The scheduling server obtains a ratio set according to the access quality set, the resource demand set, and the available resource set, where the ratio set includes coverage ratios of the service clusters to the terminal clusters.

Coverage ratios of the service clusters to the terminal clusters are percentages of resources provided by the service clusters to the terminal clusters to resource demands of the terminal clusters. For example, the service cluster 1 covers 30% of the terminal cluster 1, which means that a resource provided by the service cluster 1 to the terminal cluster 1 occupies 30% of a resource demand of the terminal cluster 1. i and j are both positive integers greater than 1.

For example, the scheduling server obtains a ratio set N according to the access quality set D, the resource demand set U, and the available resource set A, and the ratio set N=($n_{11}$, $n_{12}$, $n_{13}$, ... $n_{1n}$, $n_{21}$, $n_{22}$, ... $n_{2n}$, ... , $n_{m1}$, $n_{m2}$, ... , $n_{mn}$), where $n_{ij}$ represents a coverage ratio of the service cluster j to the terminal cluster i.

In this embodiment, there are multiple manners of obtaining the ratio set according to the access quality set, the resource demand set, and the available resource set. For example, that a sum of resource demands of the terminal clusters for machine clusters is less than available resources of the machine clusters is used as a resource restriction, and then the ratio set is obtained according to the restriction and the access quality set. That is, that the scheduling server obtains a ratio set according to the access quality set, the resource demand set, and the available resource set may include:

obtaining, by the scheduling server, the corresponding ratio set according to the resource restriction and the access quality set, where

the resource restriction includes: a sum of the resource demands of the terminal clusters for the service clusters is less than or equal to the available resources of the service clusters, and the sum of the resource demands is obtained according to the resource demand set and the to-be-obtained ratio set.

In this embodiment, the sum of the resource demands of the terminal clusters for the service clusters is a sum of resources that the service clusters need to provide to all the terminal clusters.

For example, when the matrix model is used, a weight matrix $N_{m\times n}$ may be obtained according to the access quality matrix $D_{m\times n}$, the resource demand set $U_m$, and the available resource matrix $A_n$, where an element $n_{ij}$ in the weight matrix $N_{m\times n}$ represents a coverage ratio of the service cluster j to the terminal cluster i. Specifically, the weight matrix $N_{m\times n}$ may be solved according to the resource restriction: $U_m \times N_{m\times n} \leq A_n$ and the access quality matrix $D_{m\times n}$, so as to obtain a corresponding ratio set.

In an implementation, to improve business service quality and ensure reasonableness of access scheduling, in this embodiment, that the sum of the access quality between the terminal clusters and the machine clusters is the maximum may be used as optimal scheduling. That is, in this embodiment, a ratio set when the sum of the access quality is the maximum or best may be obtained. In this case, the obtaining, by the scheduling server, the corresponding ratio set according to the resource restriction and the access quality set may include: obtaining, by the scheduling server, the corresponding ratio set according to the resource restriction, a quality constraint, and the access quality set, where the quality constraint includes that the sum of the access quality in the access quality set is the maximum. In an implementation, the quality constraint may be represented or obtained by the access quality set and the to-be-obtained ratio set.

For example, when the matrix model is used, first, the access quality matrix $D_{m\times n}$, the resource demand set $U_m$, and the available resource matrix $A_n$ are obtained, and then the resource restriction: $U_m \times N_{m\times n} \leq A_n$ is obtained. The quality constraint that the sum of the access quality is the maximum may be represented by the access quality matrix $D_{m\times n}$ and the to-be-obtained weight matrix $N_{m\times n}$. For example, that the sum of the access quality is the maximum may be represented when

$$w = \left| D_{m\times n} \times N_{m\times n}^T \right|$$ is the minimum or maximum. In this case, the ratio set may be obtained by solving the weight matrix $N_{m\times n}$ when $w = \left| D_{m\times n} \times N_{m\times n}^T \right|$ is the maximum or minimum. In an actual application, if $d_{ij}$ in $D_{m\times n}$ is the logic distance between the terminal cluster i and the service cluster j (a shorter logic distance represents greater access quality), in this case, the needed ratio set, that is, optimal scheduling, may be obtained by solving the weight matrix $N_{m\times n}$ according to the resource restriction when $w = \left| D_{m\times n} \times N_{m\times n}^T \right|$ is the minimum.

In an implementation, to ensure that some terminal clusters may preferentially obtain resources, for example, when machine division is performed on the terminals according to nations, to ensure that Chinese terminals obtain resources prior to English terminals, in this embodiment, resource obtaining priorities of the terminal clusters may be set. The resource obtaining priorities may also be considered when the ratios are obtained. In this case, the obtaining, by the scheduling server, the corresponding ratio set according to the resource restriction, a quality constraint, and the access quality set may include:

obtaining, by the scheduling server, the corresponding ratio set according to the resource restriction, a priority set, the quality constraint, and the access quality set, where the priority set includes resource obtaining priorities of the terminal clusters.

For example, when the ratios are calculated by using the matrix model, a priority set P may be converted into a matrix $P_m$, that is, a priority vector, where $p_i$ represents a resource obtaining priority of the terminal cluster i. In this case, the ratio set may be obtained by solving the weight matrix $N_{m\times n}$ when the

$$w = \left| \left( D_{m\times n} \times N_{m\times n}^T \right) \times P_m \right|$$ is the minimum or maximum.

In an implementation, to satisfy scheduling demands of manual intervention and resolve a problem of conflict between automatic scheduling and manual adjustment, in the method in this embodiment, manual adjustment may be preferentially ensured. That is, a ratio constraint may also be added in the method in this embodiment. The ratio constraint may include: some of the ratios in the ratio set are predetermined ratios. in this case, the obtaining, by the scheduling server, the corresponding ratio set according to the resource restriction, a quality constraint, and the access quality set may include: obtaining, by the scheduling server, the corresponding ratio set according to the resource restriction, the quality constraint, the ratio constraint, and the access quality set.

For example, in the process of calculating the ratios by using the matrix model, before calculation, some values of the solved vector $N_{m\times n}$ are initialized. For example, it is set that $n_{31}=40\%$, where $n_{31}$ may represent that a coverage ratio of the service cluster 3 to the terminal cluster is 40%.

Because once the resource utilization of the service clusters is limited, the sizes of resources of the service clusters are strictly limited. That is, after the available resources of the service clusters are adjusted by using the preset resource utilization upper limits, in this case, the ratios may not be obtained, and consequently, scheduling cannot be performed. For example, when a demand of a terminal cluster increases, it may cause that the sum of the resource demands of the terminal clusters for the service clusters is greater than available resource upper limit amounts of the service clusters. In this case, it cannot be obtained to satisfy the resource restriction. Therefore, the ratio set cannot be obtained. To overcome the problem, in this embodiment, the available resource amounts may be adjusted according to the resource utilization upper limits. In addition, when obtaining of the ratio set by the scheduling server fails, the available resource amounts in the available resource set are adjusted according to resource utilization absolute upper limits, and the resource utilization absolute upper limits are greater than the resource utilization upper limits.

For example, assuming that a resource utilization upper limit of the service cluster j is rj, and the resource utilization absolute upper limit is rj', to satisfy the resource use demand, an available resource amount aj of the service cluster j may be initialized by using rj. Specifically, it may be made that aj=aj×rj. In this case, aj is an available resource upper limit mount of the service cluster j. Then, the scheduling server may obtain the ratio set N according to the access quality set D, the resource demand set U, and the available resource set A. If obtaining of the ratio set fails, the available resource upper limit amount aj in the available resource set A may be initialized according to that the resource utilization absolute upper limit is rj', and initialized aj is an available resource absolute upper limit amount. Specifically, it may

$$a_j = a_j \times \frac{r_j'}{r_j}$$

be made that . After initialization of all available resource upper limit mounts in the available resource set A is completed, the scheduling server may obtain the ratio set N again according to the access quality set D, the resource demand set U, and the available resource set A.

Step 205: The scheduling server allocates corresponding target service clusters to the terminal clusters according to the ratio set.

Specifically, the corresponding target clusters may be allocated to the terminal clusters by using a preset algorithm and the ratio set.

Step 206: The scheduling server allocates, in the target service clusters, to the terminals in the terminal clusters target servers that need to be accessed.

Specifically, during allocation, target servers may be allocated to the terminals according to available resources or geographic locations of the servers in the target service clusters.

It should be noted that in a specific implementation, the scheduling server may be an independent entity or include multiple entities, for example, may include multiple service devices.

It can be known from the above that in this embodiment, the scheduling server obtains the ratio set according to the access quality set, the resource demand set, and the available resource set; then, the scheduling server allocates corresponding target service clusters to the terminal clusters according to the ratio set; the scheduling server allocates, in the target service clusters, to the terminals in the terminal clusters target servers that need to be accessed. In the solution, access scheduling may be performed based on the available resources of the service clusters, the resource demands of the terminal clusters, and the access quality between the terminal clusters and the service clusters. It may be known that the scheduling solution gives consideration to both an access capacity and the access quality. Therefore, access scheduling of the terminals can be optimized, and accuracy of access scheduling of the terminals is improved relative to the existing technology.

In addition, in this embodiment of the present invention, the weight matrix is calculated by using a matrix vector model, so as to fast obtain the coverage ratios of the service clusters to the terminal clusters, thereby improving efficiency of access scheduling.

On the other hand, the scheduling solution provided in this embodiment of the present invention may include using by default that the access quality is the best as optimal scheduling, to improve the system resource utilization and improve business service quality after access. In addition, in the scheduling solution, the resource demands, the available resources, and the like may be adjusted according to actual operation demands (a resource use demand, a manual intervention demand, a capacity expansion demand, and the like), so that the access scheduling method in this embodiment can satisfy various personalized demands, and the method has advantages including wide application, strong flexibility, easy expansion, and the like.

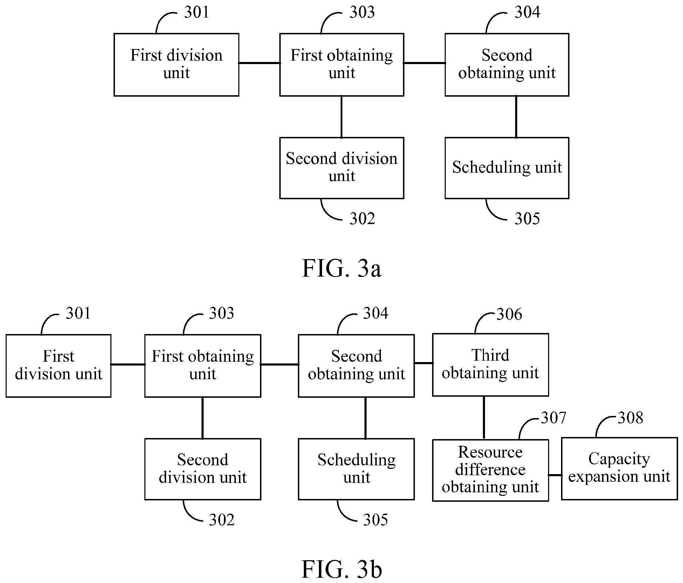

To better implement the foregoing method, an embodiment of the present invention further provides an access scheduling apparatus for a terminal. As shown in FIG. 3a, the access scheduling apparatus may further include a first division unit 301, a second division unit 302, a first obtaining unit 303, a second obtaining unit 304, and a scheduling unit 305 as follows:

(1) First division unit 301

The first division unit 301 is configured to perform cluster division on terminals, to obtain multiple terminal clusters.

For example, the first division unit 301 may be configured to perform cluster division on the terminals according to geographic locations of the terminals.

The geographic locations of the terminals may include current geographic locations of the terminals or network registered home locations of the terminals. For example, cluster division may be performed according to areas (regions, cities, provinces, nations, and the like) in which the terminals are located or that are registered by a network. Specifically, terminals having the same areas in which the terminals are located or that are registered by a network are classified into the same terminal cluster.

(2) Second division unit 302

The second division unit 302 is configured to perform cluster division on machines providing resources, to obtain multiple machine clusters.

For example, the second division unit 302 may be configured to perform cluster division on the machines according to geographic locations of the machines providing resources. For example, cluster division may be performed according to areas (regions, cities, provinces, nations, and the like) in which the machines are located. For examples, machines located in a province are divided into a machine cluster.

(3) First obtaining unit 303

The first obtaining unit 303 is configured to obtain resource demands of the terminal clusters, available resources of the machine clusters, and access quality between the terminal clusters and the machine clusters.

There are multiple manners of obtaining the resource demands of the terminal clusters. For example, the resource demands of the terminal clusters may be obtained based on historical request amounts of the terminal clusters. That is, the first obtaining unit 303 may be configured to:

obtain historical request amounts of the terminals in the terminal clusters;

obtain the resource demands of the terminals in the terminal clusters according to the historical request amounts; and

obtain the resource demands of the terminal clusters according to the resource demands of the terminals in the terminal clusters.

Similarly, there may be multiple manners of obtaining the available resources of the machine clusters in this embodiment. For example, the available resources of the machine clusters may be obtained in a manner of a stress test. Specifically, a stress test is performed on the machines in the machine clusters, to obtain available resources of the machines, and then the available resources of the machine clusters are obtained according to the available resources of the machines in the machine clusters. In an actual test, to improve an obtaining speed and access scheduling efficiency, a stress test may be performed based on types of the machines, and then the available resources of the machine clusters may be obtained according to the number of different types of machines.

In this embodiment, the access quality between the terminal clusters and the machine clusters may be network service quality from the terminal clusters to the machine clusters. Network service quality (that is, access quality) between the terminals and the machines may be obtained according to at least one of network performance parameters between the terminals and the machines, historical operation information between the terminals and the machines, and physical distances between the terminals and the machines, network addresses of the terminals, and network topology maps of network systems to which the terminals and the machines belong. The network performance parameters may include: network delay, a packet loss rate, delay jitter, and the like.

(4) Second obtaining unit 304

The second obtaining unit 304 is configured to obtain coverage ratios of the machine clusters to the terminal clusters according to the resource demands of the terminal clusters, the available resources of the machine clusters, and the access quality.

For example, the second obtaining unit 304 may be configured to: obtain the coverage ratios of the machine clusters to the terminal clusters according to a preset restriction and the access quality between the terminal clusters and the machine clusters, where

the preset restriction includes: a sum of the resource demands of the terminal clusters for the machine clusters is less than or equal to the available resources of the machine clusters, and the sum of the resource demands is obtained according to the resource demands of the terminal clusters and the to-be-obtained ratios.

For another example, the second obtaining unit 304 may be configured to: obtain a ratio set according to a preset constraint, an access quality set, and the preset restriction, where the access quality set includes access quality between the multiple terminal clusters and the multiple machine clusters, and the ratio set includes the coverage ratios of the machine clusters to the terminal clusters; and

the preset constraint includes: the sum of the access quality in the access quality set is the maximum.

Specifically, the second obtaining unit 304 may include: a matrix creation subunit and a ratio obtaining subunit.

The matrix creation subunit is configured to create a corresponding quality matrix according to the access quality set, where a matrix element in the quality matrix represents the access quality between the terminal clusters and the machine clusters.

The ratio obtaining subunit is configured to obtain a corresponding weight matrix according to the preset constraint, the quality matrix, and the preset restriction, where a matrix element in the weight matrix represents the coverage ratios of the machine clusters to the terminal clusters.

The scheduling unit is specifically configured to perform access scheduling on the terminals according to the weight matrix.

In an implementation, to satisfy resource limiting demands, the second obtaining unit 304 may include a processing subunit and a ratio obtaining subunit.

The processing subunit is configured to process the available resources of the machine clusters according to preset resource utilization upper limits of the machine clusters to obtain available resource upper limits of the machine clusters.

The ratio obtaining subunit is configured to obtain the coverage ratios of the machine clusters to the terminal clusters according to the resource demands of the terminal clusters, the available resource upper limits of the machine clusters, and the access quality.

The processing subunit is further configured to: process the available resource upper limits of the machine clusters according to preset resource utilization absolute upper limits when obtaining of the access ratios of the machine clusters to the terminal clusters fails, to obtain available resource absolute upper limits of the machine clusters, where the preset resource utilization absolute upper limits are greater than preset resource utilization upper limits.

The ratio obtaining subunit is further configured to obtain the coverage ratios of the machine clusters to the terminal clusters according to the resource demands of the terminal clusters, the available resource absolute upper limits of the machine clusters, and the access quality.

In an implementation, to satisfy demands of preferentially obtaining resources, the second obtaining unit in this embodiment may be configured to: obtain the coverage ratios of the machine clusters to the terminal clusters according to the resource demands of the terminal clusters, the available resource absolute upper limits of the machine clusters, and the access quality.

In an implementation, to satisfy personalized demands of capacity expansion, referring to FIG. 3b, the access scheduling apparatus in this embodiment further includes: a third obtaining unit 306, a resource difference obtaining unit 307, and a capacity expansion unit 308.

The third obtaining unit 306 is configured to obtain the sum of the resource demands of the terminal clusters for the machine clusters according to the ratios and the resource demands of the terminal clusters.

The resource difference obtaining unit 307 is configured to obtain resource differences between the sum of the resource demands and the available resources of the machine clusters.

The capacity expansion unit 308 is configured to perform, according to the resource differences, capacity expansion on a system to which the machine clusters belong.

In an implementation, based on the access apparatus shown in FIG. 3b, to implement capacity expansion with a user expected increase, the second obtaining unit 304 may be configured to:

process the resource demands of the terminal clusters according to terminal-expected increments corresponding to the terminal clusters, to obtain expected resource demands of the terminal clusters; and

obtain the coverage ratios of the machine clusters to the terminal clusters according to the expected resource demands of the terminal clusters, the available resources of the machine clusters, and the access quality.

In an implementation, based on the access apparatus shown in FIG. 3b, to implement capacity expansion with a resource limitation, the second obtaining unit 304 may be configured to:

process the available resources of the machine clusters according to preset resource increments of the machine clusters to obtain target available resources of the machine clusters; and

obtain the coverage ratios of the machine clusters to the terminal clusters according to the resource demands of the terminal clusters, the target available resources of the machine clusters, and the access quality.

(5) Scheduling unit 305

The scheduling unit 305 is configured to perform access scheduling on the terminals according to the ratios.

For example, when the ratio set or weight matrix is obtained, the scheduling unit 305 may be configured to perform access scheduling according to the ratio set or weight matrix.

In this embodiment, the scheduling unit 305 may be configured to:

determine, according to the ratios, target machine clusters to which the terminal clusters are accessed; and

determine from the target machine clusters target machines to which the terminals in the terminal clusters need to be accessed.

Specifically, an operation may be performed on the ratios by using a preset algorithm, to obtain an operation result, and the target machine clusters to which the terminal clusters are accessed are determined according to the operation result. The preset algorithm may be set according actual demands. For example, the preset algorithm may be a weighting algorithm.

During specific implementation, the foregoing units may be implemented as independent entities, or may be randomly combined, or may be implemented as a same entity or several entities. For specific implementation of the foregoing units, refer to the foregoing method embodiments. Details are not described herein again.

The access scheduling apparatus may be specifically integrated in a server or another device that needs to perform access scheduling.

It can be known from the above that in the access scheduling apparatus of this embodiment, the first division unit 301 performs cluster division on terminals, to obtain multiple terminal clusters; the second division unit 302 performs division on machines providing resources, to obtain multiple machine clusters; then, the first obtaining unit 303 obtains resource demands of the terminal clusters, available resources of the machine clusters, and access quality between the terminal clusters and the machine clusters; the second obtaining unit 304 obtains coverage ratios of the machine clusters to the terminal clusters according to the resource demands of the terminal clusters, the available resources of the machine clusters, and the access quality; the scheduling unit 305 performs access scheduling on the terminals according to the ratios. In the solution, access scheduling may be performed based on the available resources of the machine clusters, the resource demands of the terminal clusters, and the access quality between the terminal clusters and the machine clusters. It may be known that the scheduling solution gives consideration to both an access capacity and the access quality. Therefore, access scheduling of the terminals can be optimized, and accuracy of access scheduling of the terminals is improved relative to the existing technology.

In the several embodiments provided in the present invention, it should be understood that the disclosed method and apparatus may be implemented in other manners. The described apparatus embodiments are merely exemplary. For example, the module division is a merely logical function division and may be other division manners during actual implementation. For example, multiple modules or components may be combined or integrated into another system, or some features may be ignored or not executed. In addition, the displayed or discussed mutual communication connections between the components may be implemented through some interfaces, indirect couplings or communication connections between the devices or modules, or electrical connections, mechanical connections, or connections in other forms.

The modules described as separation parts may be or may not be physically separated. The parts displayed as modules may be or may not be physical modules. That is, the modules may be located in a same place, or may be distributed to multiple network modules. Some or all of the modules are selected according to actual requirements to achieve the objective of the solutions of the embodiments.

In addition, functional modules in the embodiments of the present invention may be all integrated in a processing module, each module is separately used as a module, or two or more modules are integrated in a module. The integrated module may be implemented in a form of hardware, or may be implemented in form of hardware plus a software functional module.

A person of ordinary skill in the art may understand that all or some of the steps of the foregoing method embodiments may be implemented by using hardware relevant to a program instruction. The program may be stored in a computer readable storage medium. When being executed, the program performs steps of the foregoing method embodiments. The storage medium includes: various media capable of storing program code such as a mobile storage device, a read-only memory (ROM, Read-Only Memory), a magnetic disk, or an optical disc.

Alternatively, in the embodiments of the present invention, if implemented in the form of software functional modules and sold or used as independent products, the integrated modules may be stored in a computer-readable storage medium. Based on such understanding, the technical solutions of the embodiments of the present invention essentially or the part contributing to the existing technology may be implemented in a form of a software product. The computer software product is stored in a storage medium and includes several instructions for instructing a computer device (which may be a personal computer, a server, a network device, or the like) to perform all or some of the methods in the embodiments of the present invention. The foregoing storage medium includes: any media that can store program code, such as a mobile storage device, a ROM, a magnetic disk, or an optical disc.

For the memory switching method and apparatus recorded in the embodiments of the present invention, the foregoing embodiments are only used as examples, but the present invention is not limited thereto. The present invention is limited by the scope of the appended claims.

The above descriptions are merely preferred embodiments of the present invention and are not intended to limit the protection scope of the present invention.

Industrial applicability

In the technical solutions of the present invention, access scheduling is performed based on the available resources of the machine clusters, the resource demands of the terminal clusters, and the access quality between the terminal clusters and the machine clusters. It can be known that the scheduling solution gives consideration to both an access capacity and the access quality. Therefore, access scheduling of the terminals can be optimized, and accuracy of access scheduling of the terminals is improved relative to the existing technology.

**Claims**

1. An access scheduling method for a terminal, comprising:

   performing cluster division on terminals, to obtain multiple terminal clusters;
   performing cluster division on machines providing resources, to obtain multiple machine clusters;

obtaining resource demands of the terminal clusters, available resources of the machine clusters, and access quality between the terminal clusters and the machine clusters, wherein access quality between the terminal clusters and the machine clusters comprises network service quality from the terminal clusters to the machine clusters;

obtaining coverage ratios of the machine clusters to the terminal clusters according to the resource demands of the terminal clusters, the available resources of the machine clusters, and the access quality, wherein the coverage ratios of the machine clusters to the terminal clusters are percentages of resources provided by the machine clusters to the terminal clusters to the resource demands of the terminal clusters; and

performing access scheduling on the terminals according to the ratios.

2. The access scheduling method according to claim 1, wherein the step of obtaining coverage ratios of the machine clusters to the terminal clusters according to the resource demands of the terminal clusters, the available resources of the machine clusters, and the access quality comprises:

obtaining the coverage ratios of the machine clusters to the terminal clusters according to a preset restriction and the access quality between the terminal clusters and the machine clusters, wherein

the preset restriction comprises: a sum of the resource demands of the terminal clusters for the machine clusters is less than or equal to the available resources of the machine clusters, and the sum of the resource demands is obtained according to the resource demands of the terminal clusters and to-be-obtained ratios.

3. The access scheduling method according to claim 2, wherein the step of obtaining the coverage ratios of the machine clusters to the terminal clusters according to a preset restriction and the access quality between the terminal clusters and the machine clusters comprises:

obtaining a ratio set according to a preset constraint, an access quality set, and the preset restriction, wherein the access quality set comprises access quality between the multiple terminal clusters and the multiple machine clusters, and the ratio set comprises the coverage ratios of the machine clusters to the terminal clusters; and

the preset constraint comprises: the sum of the access quality in the access quality set is the maximum.

4. The access scheduling method according to claim 3, wherein the step of obtaining a ratio set according to a preset constraint, an access quality set, and the preset restriction comprises:

creating a corresponding quality matrix according to the access quality set, wherein a matrix element in the quality matrix represents the access quality between the terminal clusters and the machine clusters; and

obtaining a corresponding weight matrix according to the preset constraint, the quality matrix, and the preset restriction, wherein a matrix element in the weight matrix represents the coverage ratios of the machine clusters to the terminal clusters; and

the step of performing access scheduling on the terminals according to the ratios specifically comprises: performing access scheduling on the terminals according to the weight matrix.

5. The access scheduling method according to any one of claims 1-4, wherein the step of obtaining coverage ratios of the machine clusters to the terminal clusters according to the resource demands of the terminal clusters, the available resources of the machine clusters, and the access quality comprises:

processing the available resources of the machine clusters according to preset resource utilization upper limits of the machine clusters to obtain available resource upper limits of the machine clusters; and

obtaining the coverage ratios of the machine clusters to the terminal clusters according to the resource demands of the terminal clusters, the available resource upper limits of the machine clusters, and the access quality.

6. The access scheduling method according to claim 5, further comprising:

processing the available resource upper limits of the machine clusters according to preset resource utilization absolute upper limits when obtaining of the coverage ratios of the machine clusters to the terminal clusters fails, to obtain available resource absolute upper limits of the machine clusters, wherein the preset resource utilization absolute upper limits are greater than preset resource utilization upper limits; and

obtaining the coverage ratios of the machine clusters to the terminal clusters according to the resource demands of the terminal clusters, the available resource absolute upper limits of the machine clusters, and the access quality.

7. The access scheduling method according to claim 2, wherein the step of obtaining the coverage ratios of the machine clusters to the terminal clusters according to a preset restriction and the access quality between the terminal clusters and the machine clusters specifically comprises:
obtaining the coverage ratios of the machine clusters to the terminal clusters according to the resource demands of the terminal clusters, the available resource absolute upper limits of the machine clusters, and the access quality.

8. The access scheduling method according to any one of claims 1-7, wherein after the obtaining coverage ratios of the machine clusters to the terminal clusters, the access scheduling method further comprises:

   obtaining the sum of the resource demands of the terminal clusters for the machine clusters according to the ratios and the resource demands of the terminal clusters;
   obtaining resource differences between the sum of the resource demands and the available resources of the machine clusters; and
   performing, according to the resource differences, capacity expansion on a system to which the machine clusters belong.

9. The access scheduling method according to claim 8, wherein the step of obtaining coverage ratios of the machine clusters to the terminal clusters according to the resource demands of the terminal clusters, the available resources of the machine clusters, and the access quality comprises:

   processing the resource demands of the terminal clusters according to terminal-expected increments corresponding to the terminal clusters, to obtain expected resource demands of the terminal clusters; and
   obtaining the coverage ratios of the machine clusters to the terminal clusters according to the expected resource demands of the terminal clusters, the available resources of the machine clusters, and the access quality.

10. The access scheduling method according to claim 8, wherein the step of obtaining coverage ratios of the machine clusters to the terminal clusters according to the resource demands of the terminal clusters, the available resources of the machine clusters, and the access quality specifically comprises:

    processing the available resources of the machine clusters according to preset resource increments of the machine clusters to obtain target available resources of the machine clusters; and
obtaining the coverage ratios of the machine clusters to the terminal clusters according to the resource demands of the terminal clusters, the target available resources of the machine clusters, and the access quality.

11. An access scheduling apparatus for a terminal, comprising:

    a first division unit, configured to perform cluster division on terminals, to obtain multiple terminal clusters;
    a second division unit, configured to perform cluster division on machines providing resources, to obtain multiple machine clusters;
    a first obtaining unit, configured to obtain resource demands of the terminal clusters, available resources of the machine clusters, and access quality between the terminal clusters and the machine clusters, wherein access quality between the terminal clusters and the machine clusters comprises network service quality from the terminal clusters to the machine clusters;
    a second obtaining unit, configured to obtain coverage ratios of the machine clusters to the terminal clusters according to the resource demands of the terminal clusters, the available resources of the machine clusters, and the access quality, wherein the coverage ratios of the machine clusters to the terminal clusters are percentages of resources provided by the machine clusters to the terminal clusters to the resource demands of the terminal clusters; and
    a scheduling unit, configured to perform access scheduling on the terminals according to the ratios.

12. The access scheduling apparatus according to claim 11, wherein the second obtaining unit is configured to:

    obtain the coverage ratios of the machine clusters to the terminal clusters according to a preset restriction and the access quality between the terminal clusters and the machine clusters, wherein
    the preset restriction comprises: a sum of the resource demands of the terminal clusters for the machine clusters is less than or equal to the available resources of the machine clusters, and the sum of the resource demands is obtained according to the resource demands of the terminal clusters and to-be-obtained ratios.

13. The access scheduling apparatus according to claim 12, wherein the second obtaining unit is configured to:

obtain a ratio set according to a preset constraint, an access quality set, and the preset restriction, wherein the access quality set comprises access quality between the multiple terminal clusters and the multiple machine clusters, and the ratio set comprises the coverage ratios of the machine clusters to the terminal clusters; and

the preset constraint comprises: the sum of the access quality in the access quality set is the maximum.

14. The access scheduling apparatus according to claim 13, wherein the second obtaining unit comprises: a matrix creation subunit and a ratio obtaining subunit, wherein

the matrix creation subunit is configured to create a corresponding quality matrix according to the access quality set, wherein a matrix element in the quality matrix represents the access quality between the terminal clusters and the machine clusters;

the ratio obtaining subunit is configured to obtain a corresponding weight matrix according to the preset constraint, the quality matrix, and the preset restriction, wherein a matrix element in the weight matrix represents the coverage ratios of the machine clusters to the terminal clusters; and

the scheduling unit is configured to perform access scheduling on the terminals according to the weight matrix.

15. A computer storage medium, the computer storage medium storing computer executable instructions, and the computer executable instructions being used for performing the access scheduling method according to any one of claims 1 to 10.

**Patentansprüche**

1. Zugriffsplanungsverfahren für ein Terminal, das umfasst:

Durchführung von Cluster-Teilung auf Terminals, um mehrere Terminal - Cluster zu erfassen;

Durchführung von Cluster-Teilung auf Maschinen, die Ressourcen bereitstellen, um mehrere Maschinen-Cluster zu erfassen;

Erfassen von Ressourcenbedarf der Terminal-Cluster, verfügbaren Ressourcen der Maschinen-Cluster und Zugriffsqualität zwischen den Terminal-Clustern und den Maschinen-Clustern, wobei die Zugriffsqualität zwischen den Terminal-Clustern und den Maschinen-Clustern die Netzdienstqualität von den Terminal-Clustern zu den Maschinen-Clustern umfasst;

Erfassen von Abdeckungsverhältnissen der Maschinen-Cluster zu den Terminal-Clustern nach dem Ressourcenbedarf der Terminal-Cluster, den verfügbaren Ressourcen der Maschinen-Cluster und der Zugriffsqualität, wobei die Abdeckungsverhältnisse der Maschinen-Cluster zu den Terminal-Clustern Prozentsätze der von den Maschinen-Clustern den Terminal-Clustern bereitgestellten Ressourcen nach dem Ressourcenbedarf der Terminal-Cluster sind; und

Durchführung der Zugriffsplanung auf den Terminals nach den Verhältnissen.

2. Zugriffsplanungsverfahren nach Anspruch 1, wobei der Schritt des Erfassens von Abdeckungsverhältnissen der Maschinen-Cluster zu den Terminal-Clustern nach dem Ressourcenbedarf der Terminal-Cluster, den verfügbaren Ressourcen der Maschinen-Cluster und der Zugriffsqualität umfasst:

Erfassen der Abdeckungsverhältnisse der Maschinen-Cluster zu den Terminal-Clustern nach einer vorgegebenen Beschränkung und der Zugriffsqualität zwischen den Terminal-Clustern und den Maschinen-Clustern, wobei die vorgegebene Beschränkung umfasst: eine Summe des Ressourcenbedarfs der Terminal-Cluster für die Maschinen-Cluster ist kleiner oder gleich den verfügbaren Ressourcen der Maschinen-Cluster, und die Summe des Ressourcenbedarfs wird nach dem Ressourcenbedarf der Terminal-Cluster und den zu erfassenden Verhältnissen erfasst.

3. Zugriffsplanungsverfahren nach Anspruch 2, wobei der Schritt des Erfassens der Abdeckungsverhältnisse der Maschinen-Cluster zu den Terminal-Clustern nach einer vorgegebenen Beschränkung und der Zugriffsqualität zwischen den Terminal-Clustern und den Maschinen-Clustern umfasst:

Erfassen eines Verhältnissatzes nach einer vorgegebenen Einschränkung, eines Zugriffsqualitätssatzes und der vorgegebenen Beschränkung, wobei der Zugriffsqualitätssatz die Zugriffsqualität zwischen den mehreren Terminal-Clustern und den mehreren Maschinen-Clustern umfasst und der Verhältnissatz die Abdeckungsverhältnisse der Maschinen-Cluster zu den Terminal-Clustern umfasst; und die vorgegebene Einschränkung umfasst: die Summe der Zugriffsqualität im Zugriffsqualitätssatz ist das Maximum.

4. Zugriffsplanungsverfahren nach Anspruch 3, wobei der Schritt des Erfassens eines Verhältnissatzes nach einer vorgegebenen Beschränkung, einem Zugriffsqualitätssatz und der vorgegebenen Be-

schränkung umfasst:

> Erzeugen einer entsprechenden Qualitätsmatrix nach dem Zugriffsqualitätssatz, wobei ein Matrixelement in der Qualitätsmatrix die Zugriffsqualität zwischen den Terminal-Clustern und den Maschinen-Clustern darstellt; und
> Erfassen einer entsprechenden Gewichtsmatrix nach der vorgegebenen Einschränkung, der Qualitätsmatrix und der vorgegebenen Beschränkung, wobei ein Matrixelement in der Gewichtsmatrix die Abdeckungsverhältnisse der Maschinen-Cluster zu den Terminal-Clustern darstellt; und
> der Schritt der Durchführung der Zugriffsplanung auf den Terminals nach den Verhältnissen insbesondere umfasst: Durchführung der Zugriffsplanung auf den Terminals nach der Gewichtsmatrix.

5. Zugriffsplanungsverfahren nach einem der Ansprüche 1 bis 4, wobei der Schritt des Erfassens von Abdeckungsverhältnissen der Maschinen-Cluster zu den Terminal-Clustern nach dem Ressourcenbedarf der Terminal - Cluster, den verfügbaren Ressourcen der Maschinen-Cluster und der Zugriffsqualität umfasst:

> Verarbeiten der verfügbaren Ressourcen der Maschinen-Cluster nach vorgegebenen Obergrenzen für die Ressourcennutzung der Maschinen-Cluster, um Obergrenzen für die verfügbaren Ressourcen der Maschinen-Cluster zu erfassen; und
> Erfassen der Abdeckungsverhältnisse der Maschinen-Cluster zu den Terminal-Clustern nach dem Ressourcenbedarf der Terminal-Cluster, den Obergrenzen für verfügbare Ressourcen der Maschinen-Cluster und der Zugriffsqualität.

6. Zugriffsplanungsverfahren nach Anspruch 5, das ferner umfasst:

> Verarbeiten der Obergrenzen für verfügbare Ressourcen der Maschinen-Cluster nach vorgegebenen absoluten Obergrenzen für die Ressourcennutzung, wenn das Erfassen der Abdeckungsverhältnisse der Maschinen-Cluster zu den Terminal-Clustern nicht gelingt, um absolute Obergrenzen für verfügbare Ressourcen der Maschinen-Cluster zu erfassen,
> wobei die vorgegebenen absoluten Obergrenzen für die Ressourcennutzung größer sind als die vorgegebenen Obergrenzen für die Ressourcennutzung; und
> Erfassen der Abdeckungsverhältnisse der Maschinen-Cluster zu den Terminal-Clustern nach dem Ressourcenbedarf der Terminal-Cluster, den absoluten Obergrenzen für verfügbare Ressourcen der Maschinen-Cluster und der Zugriffsqualität.

7. Zugriffsplanungsverfahren nach Anspruch 2, wobei der Schritt des Erfassens der Abdeckungsverhältnisse der Maschinen-Cluster zu den Terminal-Clustern nach einer vorgegebenen Beschränkung und der Zugriffsqualität zwischen den Terminal-Clustern und den Maschinen-Clustern insbesondere umfasst:
Erfassen der Abdeckungsverhältnisse der Maschinen-Cluster zu den Terminal-Clustern nach dem Ressourcenbedarf der Terminal-Cluster, den absoluten Obergrenzen für verfügbare Ressourcen der Maschinen-Cluster und der Zugriffsqualität.

8. Zugriffsplanungsverfahren nach einem der Ansprüche 1 bis 7, wobei nach dem Erfassen von Abdeckungsverhältnissen der Maschinen-Cluster zu den Terminal-Clustern das Zugriffsplanungsverfahren ferner umfasst:

> Erfassen der Summe des Ressourcenbedarfs der Terminal-Cluster für die Maschinen-Cluster nach den Verhältnissen und des Ressourcenbedarfs der Terminal-Cluster;
> Erfassen von Ressourcendifferenzen zwischen der Summe des Ressourcenbedarfs und den verfügbaren Ressourcen der Maschinen-Cluster; und
> Durchführung entsprechend der Ressourcendifferenzen einer Kapazitätserweiterung auf einem System, zu dem die Maschinen-Cluster gehören.

9. Zugriffsplanungsverfahren nach Anspruch 8, wobei der Schritt des Erfassens von Abdeckungsverhältnissen der Maschinen-Cluster zu den Terminal-Clustern nach dem Ressourcenbedarf der Terminal-Cluster, den verfügbaren Ressourcen der Maschinen-Cluster und der Zugriffsqualität umfasst:
Verarbeiten des Ressourcenbedarfs der Terminal-Cluster nach den vom Terminal erwarteten Inkrementen, die den Terminal-Clustern entsprechen, um erwarteten Ressourcenbedarf der Terminal-Cluster zu erfassen; und Erfassen der Abdeckungsverhältnisse der Maschinen-Cluster zu den Terminal-Clustern nach dem erwarteten Ressourcenbedarf der Terminal-Cluster, den verfügbaren Ressourcen der Maschinen-Cluster und der Zugriffsqualität.

10. Zugriffsplanungsverfahren nach Anspruch 8, wobei der Schritt des Erfassens von Abdeckungsverhältnissen der Maschinen-Cluster zu den Terminal-Clustern nach dem Ressourcenbedarf der Terminal-Cluster, den verfügbaren Ressourcen der Maschinen-Cluster und der Zugriffsqualität insbesondere umfasst:

Verarbeiten der verfügbaren Ressourcen der Maschinen-Cluster nach vorgegebenen Ressourceninkrementen der Maschinen-Cluster, um verfügbare Zielressourcen der Maschinen-Cluster zu erfassen; und
Erfassen der Abdeckungsverhältnisse der Maschinen-Cluster zu den Terminal-Clustern nach dem Ressourcenbedarf der Terminal-Cluster, den verfügbaren Zielressourcen der Maschinen-Cluster und der Zugriffsqualität.

11. Zugriffsplanungsvorrichtung für ein Terminal, die umfasst:

eine erste Teilungseinheit, die so ausgelegt ist, dass sie eine Cluster-Teilung an Terminals durchführt, um mehrere Terminal-Cluster zu erfassen;
eine zweite Teilungseinheit, die so ausgelegt ist, dass sie eine Cluster-Teilung an Maschinen, die Ressourcen bereitstellen, durchführt, um mehrere Maschinen-Cluster zu erfassen;
eine erste Erfassungseinheit, die so ausgelegt ist, dass sie Ressourcenbedarf der Terminal-Cluster, verfügbare Ressourcen der Maschinen-Cluster und die Zugriffsqualität zwischen den Terminal-Clustern und den Maschinen-Clustern erfasst, wobei die Zugriffsqualität zwischen den Terminal-Clustern und den Maschinen-Clustern die Netzdienstqualität von den Terminal-Clustern zu den Maschinen-Clustern umfasst;
eine zweite Erfassungseinheit, die ausgelegt ist, um Abdeckungsverhältnisse der Maschinen-Cluster zu den Terminal-Clustern nach dem Ressourcenbedarf der Terminal-Cluster, den verfügbaren Ressourcen der Maschinen-Cluster und der Zugriffsqualität zu erfassen, wobei die Abdeckungsverhältnisse der Maschinen-Cluster zu den Terminal-Clustern Prozentsätze der von den Maschinen-Clustern den Terminal-Clustern bereitgestellten Ressourcen nach dem Ressourcenbedarf der Terminal-Cluster sind; und
eine Planungseinheit, die so ausgelegt ist, dass sie die Zugriffsplanung auf den Terminals nach den Verhältnissen durchführt.

12. Zugriffsplanungsvorrichtung nach Anspruch 11, wobei die zweite Erfassungseinheit so ausgelegt ist, dass sie:
die Abdeckungsverhältnisse der Maschinen-Cluster zu den Terminal-Clustern nach einer vorgegebenen Beschränkung und der Zugriffsqualität zwischen den Terminal-Clustern und den Maschinen-Clustern erfasst, wobei die vorgegebene Beschränkung um-

fasst: eine Summe des Ressourcenbedarfs der Terminal-Cluster für die Maschinen-Cluster ist kleiner oder gleich den verfügbaren Ressourcen der Maschinen-Cluster, und die Summe des Ressourcenbedarfs wird nach dem Ressourcenbedarf der Terminal-Cluster und den zu erfassenden Verhältnissen erfasst.

13. Zugriffsplanungsvorrichtung nach Anspruch 12, wobei die zweite Erfassungseinheit so ausgelegt ist, dass sie:

einen Verhältnissatz nach einer vorgegebenen Einschränkung, einen Zugriffsqualitätssatz und die vorgegebene Beschränkung erfasst, wobei der Zugriffsqualitätssatz die Zugriffsqualität zwischen den mehreren Terminal-Clustern und den mehreren Maschinen-Clustern umfasst und der Verhältnissatz die Abdeckungsverhältnisse der Maschinen-Cluster zu den Terminal-Clustern umfasst; und
die vorgegebene Einschränkung umfasst: die Summe der Zugriffsqualität im Zugriffsqualitätssatz ist das Maximum.

14. Zugriffsplanungsvorrichtung nach Anspruch 13, wobei die zweite Erfassungseinheit umfasst: eine Matrixerzeugungs-Untereinheit und eine Verhältniserfassungs-Untereinheit, wobei
die Matrixerzeugungs-Untereinheit so ausgelegt ist, dass sie eine entsprechende Qualitätsmatrix nach dem Zugriffsqualitätssatz erzeugt, wobei ein Matrixelement in der Qualitätsmatrix die Zugriffsqualität zwischen den Terminal-Clustern und den Maschinen-Clustern darstellt;
die Verhältniserfassungs-Untereinheit ausgelegt ist, um eine entsprechende Gewichtsmatrix nach der vorgegebenen Einschränkung, der Qualitätsmatrix und der vorgegebenen Beschränkung zu erfassen, wobei ein Matrixelement in der Gewichtsmatrix die Abdeckungsverhältnisse der Maschinen-Cluster zu den Terminal-Clustern darstellt; und
die Planungseinheit ist so ausgelegt, dass sie die Zugriffsplanung auf den Terminals nach der Gewichtsmatrix durchführt.

15. Computerspeichermedium, wobei das Computerspeichermedium computerausführbare Befehle speichert und die computerausführbaren Befehle zur Durchführung des Zugriffsplanungsverfahrens nach einem der Ansprüche 1 bis 10 verwendet werden.

**Revendications**

1. Procédé de planification d'accès pour un terminal, comprenant :

La réalisation d'une division en groupes sur des terminaux, afin d'obtenir de multiples groupes de terminaux ;

la réalisation d'une division en groupes sur des machines fournissant des ressources, afin d'obtenir de multiples groupes de machines ;

l'obtention d'exigences de ressources des groupes de terminaux, de ressources disponibles des groupes de machines, et de qualités d'accès entre les groupes de terminaux et les groupes de machines, les qualités d'accès entre les groupes de terminaux et les groupes de machines comprenant des qualités de service réseau des groupes de terminaux aux groupes de machines ;

l'obtention de taux de couverture des groupes de machines sur les groupes de terminaux selon les exigences de ressources des groupes de terminaux, les ressources disponibles des groupes de machines et les qualités d'accès, les taux de couverture des groupes de machines sur les groupes de terminaux étant des pourcentages de ressources fournies par les groupes de machines aux groupes de terminaux par rapport aux exigences de ressources des groupes de terminaux ; et

la réalisation d'une planification d'accès sur les terminaux selon les taux.

2. Procédé de planification d'accès selon la revendication 1, dans lequel l'étape d'obtention de taux de couverture des groupes de machines sur les groupes de terminaux selon les exigences de ressources des groupes de terminaux, les ressources disponibles des groupes de machines et les qualités d'accès comprend :

l'obtention des taux de couverture des groupes de machines sur les groupes de terminaux selon une restriction prédéfinie et les qualités d'accès entre les groupes de terminaux et les groupes de machines, dans lequel

la restriction prédéfinie comprend : qu'une somme des exigences de ressources des groupes de terminaux envers les groupes de machines soit inférieure ou égale aux ressources disponibles des groupes de machines, et la somme des exigences de ressources est obtenue selon les exigences de ressources des groupes de terminaux et des taux à obtenir.

3. Procédé de planification d'accès selon la revendication 2, dans lequel l'étape d'obtention des taux de couverture des groupes de machines sur les groupes de terminaux selon une restriction prédéfinie et les qualités d'accès entre les groupes de terminaux et les groupes de machines comprend :

l'obtention d'un ensemble de taux selon une contrainte prédéfinie, un ensemble de qualités d'accès et la restriction prédéfinie, l'ensemble de qualités d'accès comprenant des qualités d'accès entre les multiples groupes de terminaux et les multiples groupes de machines, et l'ensemble de taux comprenant les taux de couverture des groupes de machines sur les groupes de terminaux ; et

la contrainte prédéfinie comprend : que la somme des qualités d'accès de l'ensemble de qualités d'accès soit maximale.

4. Procédé de planification d'accès selon la revendication 3, dans lequel l'étape d'obtention d'un ensemble de taux selon une contrainte prédéfinie, un ensemble de qualités d'accès et la restriction prédéfinie comprend :

la création d'une matrice de qualités correspondante selon l'ensemble de qualités d'accès, un élément de matrice de la matrice de qualités représentant la qualité d'accès entre un groupe de terminaux et un groupe de machines ; et

l'obtention d'une matrice de poids correspondante selon la contrainte prédéfinie, la matrice de qualités et la restriction prédéfinie, un élément de matrice de la matrice de poids représentant le taux de couverture d'un groupe de machines sur un groupe de terminaux ; et

l'étape de réalisation d'une planification d'accès sur les terminaux selon les taux comprend spécifiquement : la réalisation d'une planification d'accès sur les terminaux selon la matrice de poids.

5. Procédé de planification d'accès selon l'une quelconque des revendications 1 à 4, dans lequel l'étape d'obtention de taux de couverture des groupes de machines sur les groupes de terminaux selon les exigences de ressources des groupes de terminaux, les ressources disponibles des groupes de machines et les qualités d'accès comprend :

le traitement des ressources disponibles des groupes de machines selon des limites supérieures d'utilisation de ressources prédéfinies des groupes de machines afin d'obtenir des limites supérieures de ressources disponibles des groupes de machines ; et

l'obtention des taux de couverture des groupes de machines sur les groupes de terminaux selon les exigences de ressources des groupes de terminaux, les limites supérieures de ressources disponibles des groupes de machines et les qualités d'accès.

6. Procédé de planification d'accès selon la revendication 5, comprenant en outre :

le traitement des limites supérieures de ressources disponibles des groupes de machines selon des limites supérieures absolues d'utilisation de ressources prédéfinies quand l'obtention des taux de couverture des groupes de machines sur les groupes de terminaux échoue, afin d'obtenir des limites supérieures absolues de ressources disponibles des groupes de machines, les limites supérieures absolues d'utilisation de ressources prédéfinies étant supérieures aux limites supérieures d'utilisation de ressources prédéfinies ; et

l'obtention des taux de couverture des groupes de machines sur les groupes de terminaux selon les exigences de ressources des groupes de terminaux, les limites supérieures absolues de ressources disponibles des groupes de machines et les qualités d'accès.

7. Procédé de planification d'accès selon la revendication 2, dans lequel l'étape d'obtention des taux de couverture des groupes de machines sur les groupes de terminaux selon une restriction prédéfinie et les qualités d'accès entre les groupes de terminaux et les groupes de machines comprend spécifiquement :
l'obtention des taux de couverture des groupes de machines sur les groupes de terminaux selon les exigences de ressources des groupes de terminaux, les limites supérieures absolues de ressources disponibles des groupes de machines et les qualités d'accès.

8. Procédé de planification d'accès selon l'une quelconque des revendications 1 à 7, dans lequel après l'obtention de taux de couverture des groupes de machines sur les groupes de terminaux, le procédé de planification d'accès comprend en outre :

l'obtention de la somme des exigences de ressources des groupes de terminaux envers les groupes de machines selon les taux et les exigences de ressources des groupes de terminaux ;
l'obtention de différences de ressources entre la somme des exigences de ressources et les ressources disponibles des groupes de machines ; et
la réalisation, selon les différences de ressources, d'une extension de capacité sur un système auquel appartiennent les groupes de machines.

9. Procédé de planification d'accès selon la revendication 8, dans lequel l'étape d'obtention de taux de couverture des groupes de machines sur les groupes de terminaux selon les exigences de ressources des groupes de terminaux, les ressources disponibles des groupes de machines et les qualités d'accès comprend :

le traitement des exigences de ressources des groupes de terminaux selon des incréments attendus par les terminaux correspondant aux groupes de terminaux, afin d'obtenir des exigences de ressources attendues des groupes de terminaux ; et
l'obtention des taux de couverture des groupes de machines sur les groupes de terminaux selon les exigences de ressources attendues des groupes de terminaux, les ressources disponibles des groupes de machines et les qualités d'accès.

10. Procédé de planification d'accès selon la revendication 8, dans lequel l'étape d'obtention de taux de couverture des groupes de machines sur les groupes de terminaux selon les exigences de ressources des groupes de terminaux, les ressources disponibles des groupes de machines et les qualités d'accès comprend spécifiquement :

le traitement des ressources disponibles des groupes de machines selon des incréments de ressources prédéfinis des groupes de machines afin d'obtenir des ressources disponibles cibles des groupes de machines ; et
l'obtention des taux de couverture des groupes de machines sur les groupes de terminaux selon les exigences de ressources des groupes de terminaux, les ressources disponibles cibles des groupes de machines et les qualités d'accès.

11. Appareil de planification d'accès pour un terminal, comprenant :

une première unité de division, configurée pour réaliser une division en groupes sur des terminaux afin d'obtenir de multiples groupes de terminaux ;
une seconde unité de division, configurée pour réaliser une division en groupes sur des machines fournissant des ressources afin d'obtenir de multiples groupes de machines ;
une première unité d'obtention, configurée pour obtenir des exigences de ressources des groupes de terminaux, des ressources disponibles des groupes de machines, et des qualités d'accès entre les groupes de terminaux et les groupes de machines, les qualités d'accès entre les groupes de terminaux et les groupes de machines comprenant des qualités de service réseau des groupes de terminaux aux groupes de machines ;
une seconde unité d'obtention, configurée pour obtenir des taux de couverture des groupes de machines sur les groupes de terminaux selon les exigences de ressources des groupes de terminaux, les ressources disponibles des groupes de machines et les qualités d'accès, les taux de couverture des groupes de machines sur les groupes de terminaux étant des pourcentages de ressources fournies par les groupes de machines aux groupes de terminaux par rapport aux exigences de ressources des groupes de terminaux ; et

une unité de planification, configurée pour réaliser une planification d'accès sur les terminaux selon les taux.

12. Appareil de planification d'accès selon la revendication 11, dans lequel la seconde unité d'obtention est configurée pour :

obtenir les taux de couverture des groupes de machines sur les groupes de terminaux selon une restriction prédéfinie et les qualités d'accès entre les groupes de terminaux et les groupes de machines, dans lequel

la restriction prédéfinie comprend : qu'une somme des exigences de ressources des groupes de terminaux envers les groupes de machines soit inférieure ou égale aux ressources disponibles des groupes de machines, et la somme des exigences de ressources est obtenue selon les exigences de ressources des groupes de terminaux et des taux à obtenir.

13. Appareil de planification d'accès selon la revendication 12, dans lequel la seconde unité d'obtention est configurée pour :

obtenir un ensemble de taux selon une contrainte prédéfinie, un ensemble de qualités d'accès et la restriction prédéfinie, l'ensemble de qualités d'accès comprenant des qualités d'accès entre les multiples groupes de terminaux et les multiples groupes de machines, et l'ensemble de taux comprenant les taux de couverture des groupes de machines sur les groupes de terminaux ; et

la contrainte prédéfinie comprend : que la somme des qualités d'accès de l'ensemble de qualités d'accès soit maximale.

14. Appareil de planification d'accès selon la revendication 13, dans lequel la seconde unité d'obtention comprend : une sous-unité de création de matrice et une sous-unité d'obtention de taux, dans lequel la sous-unité de création de matrice est configurée pour créer une matrice de qualités correspondante selon l'ensemble de qualités d'accès, un élément de matrice de la matrice de qualités représentant la qualité d'accès entre un groupe de terminaux et un groupe de machines ;

la sous-unité d'obtention de taux est configurée pour obtenir une matrice de poids correspondante selon la contrainte prédéfinie, la matrice de qualités et la restriction prédéfinie, un élément de matrice de la matrice de poids représentant le taux de couverture d'un groupe de machines sur un groupe de terminaux ; et

l'unité de planification est configurée pour réaliser une planification d'accès sur les terminaux selon la matrice de poids.

15. Support de stockage informatique, le support de stockage informatique stockant des instructions exécutables par ordinateur, et les instructions exécutables par ordinateur étant utilisées pour réaliser le procédé de planification d'accès selon l'une quelconque des revendications 1 à 10.

Perform cluster division on terminals, to obtain multiple terminal clusters — 101

Perform cluster division on machines providing resources, to obtain multiple machine clusters — 102

Obtain resource demands of the terminal clusters, available resources of the machine clusters, and access quality between the terminal clusters and the machine clusters — 103

Obtain access ratios of the machine clusters to the terminal clusters according to the resource demands of the terminal clusters, the available resources of the machine clusters, and the access quality — 104

Perform access scheduling on the terminals according to the ratios — 105

FIG. 1

A scheduling server divides to-be-scheduled terminals into multiple terminal clusters and obtains a resource demand amount of each terminal cluster, to obtain a resource demand set — 201

The scheduling server divides to-be-scheduled servers into multiple service clusters and obtains an available resource amount of each service cluster, to obtain an available resource set — 202

The scheduling server obtains access quality between the terminal clusters and the service clusters, to obtain an access quality set — 203

The scheduling server obtains a ratio set according to the access quality set, the resource demand set, and the available resource set, where the ratio set includes coverage ratios of the service clusters to the terminal clusters — 204

The scheduling server allocates corresponding target service clusters to the terminal clusters according to the ratio set — 205

The scheduling server allocates, in the target service clusters, to the terminals in the terminal clusters target servers that need to be accessed — 206

FIG. 2

FIG. 3a

FIG. 3b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Research on resources scheduling technology based on fuzzy clustering analysis. **MEI LUO et al.** FUZZY SYSTEMS AND KNOWLEDGE DISCOVERY (FSKD), 2012 9TH INTERNATIONAL CONFERENCE ON. IEEE, 29 May 2012, 152-155